# EUROPEAN PATENT APPLICATION

(11) **EP 3 026 828 A1**
(43) Date of publication of application: **01.06.2016**
(21) Application number: 13892024.4
(22) Date of filing: 23.08.2013
(51) Int. Cl.: H04B 7/26

(54) **METHOD FOR TRANSMITTING INFORMATION AND METHOD, APPARATUS AND SYSTEM FOR DETERMINING INFORMATION IN TDD SYSTEM**

(71) Applicant: Huawei Technologies Co., Ltd., Longgang District Shenzhen, Guangdong 518129 (CN)
(72) Inventor: ZHANG, Ningbo, Shenzhen Guangdong 518129 (CN); YU, Zheng, Shenzhen Guangdong 518129 (CN); NAN, Fang, Shenzhen Guangdong 518129 (CN); CHENG, Xingqing, Shenzhen Guangdong 518129 (CN)
(74) Representative: Pfenning, Meinig & Partner mbB
(86) International application number: PCT/CN2013/082215
(87) International publication number: WO 2015/024265

(57) **Abstract**

The present invention provides an information transmission method, an information determining method, and an apparatus in a TDD system, and a system. In the method, first information is mapped onto multiple preset subframes in a radio frame, where the multiple preset subframes include at least a subframe 0 and a subframe 5, and the first information is system information or scheduling information of the system information; then a first physical channel is sent to user equipment UE, where the first physical channel carries the first information, so that the UE can detect the first physical channel in multiple preset subframes, and determine the first information, thereby decreasing detection complexity and power consumption of the UE.

## Description

### TECHNICAL FIELD

Embodiments of the present invention relate to communications technologies, and in particular, to an information transmission method, an information determining method, and an apparatus in a TDD system, and a system.

### BACKGROUND

In a Long Term Evolution (Long Term Evolution, LTE for short below) or Long Term Evolution Advanced (LTE Advanced, LTE-A for short below) system, after startup, user equipment (User Equipment, UE for short below) first detects a synchronization signal, and then detects a physical broadcast channel (Physical Broadcast Channel, PBCH for short below) to obtain a master information block (Master Information Block, MIB for short below); then, the UE detects a physical downlink control channel (Physical Downlink Control Channel, PDCCH for short below) to obtain scheduling information of a system information block type 1 (System Information Block Type 1, SIB1 for short below), and then detects a physical downlink shared channel (Physical Downlink Shared Channel, PDSCH for short below) according to the scheduling information to obtain the SIB1. In addition, one or more other system information blocks (System Information Block, SIB for short below) except the SIB1 are encapsulated in a system information (system information, SI for short below) message. The UE detects the PDCCH to obtain scheduling information of the SI, and then detects the PDSCH according to the scheduling information to obtain the SI or another SIB.

In an existing LTE or LTE-A system, a PBCH carrying a MIB, a PDCCH for scheduling a SIB1, a PDSCH carrying a SIB1, a PDCCH for scheduling SI, or a PDSCH carrying SI is transmitted in one subframe.

In consideration of coverage enhancement, transmission reliability needs to be enhanced for the PBCH carrying a MIB, the PDCCH for scheduling a SIB1, the PDSCH carrying a SIB1, the PDCCH for scheduling SI, or the PDSCH carrying SI, so as to expand coverage; in this way, an enhanced PBCH, an enhanced PDCCH (for scheduling a SIB1 or SI), and an enhanced PDSCH (carrying a SIB 1 or SI) are transmitted in multiple subframes.

For a TDD system, UE needs to perform blind detection on an enhanced PBCH, an enhanced PDCCH (for scheduling a SIB 1 or SI), and an enhanced PDSCH (carrying a SIB 1 or SI), to obtain carried information; however, blind detection by the UE increases detection complexity and power consumption of the UE.

### SUMMARY

Embodiments of the present invention provide an information transmission method, an information determining method, and an apparatus in a TDD system, and a system, so as to decrease detection complexity and power consumption of UE.

According to a first aspect, an embodiment of the present invention provides an information transmission method in a TDD system, including:
mapping first information onto multiple preset subframes in a radio frame, where the multiple preset subframes include at least a subframe 0 and a subframe 5, and the first information is system information or scheduling information of the system information; and
sending a first physical channel to user equipment UE, where the first physical channel carries the first information.

In a first possible implementation manner, the multiple preset subframes further include either of a subframe 1 and a subframe 6.

In a second possible implementation manner, the multiple preset subframes further include a subframe 1 and a subframe 6.

With reference to any one of the first aspect to the second possible implementation manner of the first aspect, in a third possible implementation manner, the multiple preset subframes further include at least one of a subframe 3, a subframe 4, a subframe 7, a subframe 8, and a subframe 9.

With reference to the first aspect or the third possible implementation manner of the first aspect, in a fourth possible implementation manner, the multiple subframes further include the subframe 3, the subframe 4, the subframe 7, the subframe 8, and the subframe 9.

In a fifth possible implementation manner, the multiple preset subframes are all downlink subframes in a radio frame that is determined by a pre-stipulated uplink-downlink configuration; or
the multiple preset subframes further include all special subframes in a radio frame that is determined by a pre-stipulated uplink-downlink configuration; or
the multiple preset subframes further include all downlink subframes and special subframes, except a subframe 0 and a subframe 5, in a radio frame that is determined by a pre-stipulated uplink-downlink configuration; or
the multiple preset subframes are all subframes in the radio frame.

With reference to the fifth possible implementation manner of the first aspect, in a sixth possible implementation manner, that the multiple preset subframes further include all downlink subframes and special subframes, except a subframe 0 and a subframe 5, in a radio frame that is determined by a pre-stipulated uplink-downlink configuration includes:
the multiple preset subframes further include all downlink subframes and special subframes, except a subframe 0 and a subframe 5, in a radio frame that is determined by a pre-stipulated uplink-downlink configuration 5.

With reference to any one of the first aspect to the sixth possible implementation manner of the first aspect, in a seventh possible implementation manner, a configuration of the special subframe is a pre-stipulated special subframe configuration.

With reference to the seventh possible implementation manner of the first aspect, in an eighth possible implementation manner, for a downlink normal cyclic prefix, the configuration of the special subframe is a pre-stipulated special subframe configuration 4, and for a downlink extended cyclic prefix, the configuration of the special subframe is a pre-stipulated special subframe configuration 3.

With reference to the seventh possible implementation manner of the first aspect or the eighth possible implementation manner of the first aspect, in a ninth possible implementation manner, the special subframe is the subframe 1 and/or the subframe 6.

With reference to any one of the first aspect to the ninth possible implementation manner of the first aspect, in a tenth possible implementation manner, after sending a first physical channel to user equipment UE, the method further includes:
sending a second physical channel to the UE, where an uplink-downlink configuration of a radio frame for transmitting the second physical channel is different from an uplink-downlink configuration of the radio frame for transmitting the first information, and/or, a special subframe configuration of a special subframe in the radio frame for transmitting the second physical channel is different from a special subframe configuration of a special subframe in the radio frame for transmitting the first information; and the second physical channel includes any one of a physical downlink control channel PDCCH, an enhanced physical downlink control channel ePDCCH, a physical control format indicator channel PCFICH, a physical hybrid automatic repeat request indicator channel PHICH, and a physical downlink shared channel PDSCH.

With reference to any one of the first aspect to the tenth possible implementation manner of the first aspect, in an eleventh possible implementation manner, the system information is at least one of a master information block MIB, a master information block of a new UE category, a master information block of a new UE type, a master information block of coverage-enhanced UE, a master information block of delay-tolerant UE, and a machine type communication master information block MTC MIB; and
the first physical channel is a physical broadcast channel PBCH carrying the system information, and/or an enhanced PBCH carrying the system information.

With reference to any one of the first aspect to the tenth possible implementation manner of the first aspect, in a twelfth possible implementation manner, the system information is at least one of a system information block type 1 SIB1, a system information block type 2 SIB2, system information SI, a machine type communication system information block type 1 MTC SIB1, a machine type communication system information block type 2 MTC SIB2, machine type communication system information MTC SI, system information of a new UE category, system information of a new UE type, system information of low-cost UE, system information of coverage-enhanced UE, system information of delay-tolerant UE, and new machine type communication system information NEW MTC SIB; and
the first physical channel is a physical downlink shared channel PDSCH carrying the system information, and/or an enhanced PDSCH carrying the system information.

With reference to any one of the first aspect to the twelfth possible implementation manner of the first aspect, in a thirteenth possible implementation manner, the scheduling information is at least one of downlink control information DCI for scheduling the SIB1, DCI for scheduling the SIB2, DCI for scheduling the SI, DCI for scheduling the MTC SIB1, DCI for scheduling the MTC SIB2, DCI for scheduling the MTC SI, DCI for scheduling the system information of a new UE category, DCI for scheduling the system information of a new UE type, DCI for scheduling the system information of low-cost UE, DCI for scheduling the system information of coverage-enhanced UE, DCI for scheduling the system information of delay-tolerant UE, and DCI for scheduling the new MTC SIB; and
the first physical channel is a physical downlink control channel PDCCH carrying the scheduling information, and/or an enhanced PDCCH carrying the scheduling information.

According to a second aspect, an embodiment of the present invention provides an information determining method in a TDD system, including:
receiving a first physical channel in multiple preset subframes in a radio frame, where the multiple preset subframes include at least a subframe 0 and a subframe 5, the first physical channel carries first information, and the first information is system information or scheduling information of the system information; and
determining the first information according to the received first physical channel.

In a first possible implementation manner, the multiple preset subframes further include either of a sub frame 1 and a subframe 6.

In a second possible implementation manner, the multiple preset subframes further include a subframe 1 and a subframe 6.

With reference to any one of the second aspect to the second possible implementation manner of the second aspect, in a third possible implementation manner, the multiple preset subframes further include at least one of a subframe 3, a subframe 4, a subframe 7, a subframe 8, and a subframe 9.

With reference to the second aspect or the third possible implementation manner of the second aspect, in a fourth possible implementation manner, the multiple preset subframes further include the subframe 3, the subframe 4, the subframe 7, the subframe 8, and the subframe 9.

In a fifth possible implementation manner, the multiple preset subframes are all downlink subframes in a radio frame that is determined by a pre-stipulated uplink-downlink configuration; or
the multiple preset subframes further include all special subframes in a radio frame that is determined by a pre-stipulated uplink-downlink configuration; or
the multiple preset subframes further include all downlink subframes and special subframes, except a subframe 0 and a subframe 5, in a radio frame that is determined by a pre-stipulated uplink-downlink configuration; or
the multiple preset subframes are all subframes in the radio frame.

With reference to the fifth possible implementation manner of the second aspect, in a sixth possible implementation manner, that the multiple preset subframes further include all downlink subframes and special subframes, except a subframe 0 and a subframe 5, in a radio frame that is determined by a pre-stipulated uplink-downlink configuration includes:
the multiple preset subframes further include all downlink subframes and special subframes, except a subframe 0 and a subframe 5, in a radio frame that is determined by a pre-stipulated uplink-downlink configuration 5.

With reference to any one of the second aspect to the sixth possible implementation manner of the second aspect, in a seventh possible implementation manner, a configuration of the special subframe is a pre-stipulated special subframe configuration.

With reference to the seventh possible implementation manner of the second aspect, in an eighth possible implementation manner, for a downlink normal cyclic prefix, the configuration of the special subframe is a pre-stipulated special subframe configuration 4, and for a downlink extended cyclic prefix, the configuration of the special subframe is a pre-stipulated special subframe configuration 3.

With reference to the seventh possible implementation manner of the second aspect or the eighth possible implementation manner of the first aspect, in a ninth possible implementation manner, the special subframe is the subframe 1 and/or the subframe 6.

With reference to any one of the second aspect to the ninth possible implementation manner of the second aspect, in a tenth possible implementation manner, after the receiving a first physical channel in multiple preset subframes in a radio frame, the method further includes:
receiving a second physical channel, where an uplink-downlink configuration of a radio frame for transmitting the second physical channel is different from an uplink-downlink configuration of the radio frame for transmitting the first information, and/or, a special subframe configuration of a special subframe in the radio frame for transmitting the second physical channel is different from a special subframe configuration of a special subframe in the radio frame for transmitting the first information; and the second physical channel includes any one of a physical downlink control channel PDCCH, an enhanced physical downlink control channel ePDCCH, a physical control format indicator channel PCFICH, a physical hybrid automatic repeat request indicator channel PHICH, and a physical downlink shared channel PDSCH.

With reference to any one of the second aspect to the tenth possible implementation manner of the second aspect, in an eleventh possible implementation manner, the system information is at least one of a master information block MIB, a master information block of a new UE category, a master information block of a new UE type, a master information block of coverage-enhanced UE, a master information block of delay-tolerant UE, and a machine type communication master information block MTC MIB; and
the first physical channel is a physical broadcast channel PBCH carrying the system information, and/or an enhanced PBCH carrying the system information.

With reference to any one of the second aspect to the tenth possible implementation manner of the second aspect, in a twelfth possible implementation manner, the system information is at least one of a system information block type 1 SIB1, a system information block type 2 SIB2, system information SI, a machine type communication system information block type 1 MTC SIB1, a machine type communication system information block type 2 MTC SIB2, machine type communication system information MTC SI, system information of a new UE category, system information of a new UE type, system information of low-cost UE, system information of coverage-enhanced UE, system information of delay-tolerant UE, and new machine type communication system information NEW MTC SIB; and
the first physical channel is a physical downlink shared channel PDSCH carrying the system information, and/or an enhanced PDSCH carrying the system information.

With reference to any one of the second aspect to the twelfth possible implementation manner of the second aspect, in a thirteenth possible implementation manner, the scheduling information is at least one of downlink control information DCI for scheduling the SIB1, DCI for scheduling the SIB2, DCI for scheduling the SI, DCI for scheduling the MTC SIB1, DCI for scheduling the MTC SIB2, DCI for scheduling the MTC SI, DCI for scheduling the system information of a new UE category, DCI for scheduling the system information of a new UE type, DCI for scheduling the system information of low-cost UE, DCI for scheduling the system information of coverage-enhanced UE, DCI for scheduling the system information of delay-tolerant UE, and DCI for scheduling the new MTC SIB; and
the first physical channel is a physical downlink control channel PDCCH carrying the scheduling information, and/or an enhanced PDCCH carrying the scheduling information.

According to a third aspect, an embodiment of the present invention provides an information transmission apparatus in a TDD system, including:
a mapping module, configured to map first information onto multiple preset subframes in a radio frame, where the multiple preset subframes include at least a sub frame 0 and a subframe 5, and the first information is system information or scheduling information of the system information; and
a sending module, configured to send a first physical channel to user equipment UE, where the first physical channel carries the first information.

In a first possible implementation manner, the multiple preset subframes further include either of a subframe 1 and a subframe 6.

In a second possible implementation manner, the multiple preset subframes further include a subframe 1 and a subframe 6.

With reference to any one of the third aspect to the second possible implementation manner of the third aspect, in a third possible implementation manner, the multiple preset subframes further include at least one of a subframe 3, a subframe 4, a subframe 7, a subframe 8, and a subframe 9.

With reference to the third aspect or the third possible implementation manner of the third aspect, in a fourth possible implementation manner, the multiple subframes further include the subframe 3, the subframe 4, the subframe 7, the subframe 8, and the subframe 9.

In a fifth possible implementation manner, the multiple preset subframes are all downlink subframes in a radio frame that is determined by a pre-stipulated uplink-downlink configuration; or
the multiple preset subframes further include all special subframes in a radio frame that is determined by a pre-stipulated uplink-downlink configuration; or
the multiple preset subframes further include all downlink subframes and special subframes, except a subframe 0 and a subframe 5, in a radio frame that is determined by a pre-stipulated uplink-downlink configuration; or
the multiple preset subframes are all subframes in the radio frame.

With reference to the fifth possible implementation manner of the third aspect, in a sixth possible implementation manner, that the multiple preset subframes further include all downlink subframes and special subframes, except a subframe 0 and a subframe 5, in a radio frame that is determined by a pre-stipulated uplink-downlink configuration includes:
the multiple preset subframes further include all downlink subframes and special subframes, except a subframe 0 and a subframe 5, in a radio frame that is determined by a pre-stipulated uplink-downlink configuration 5.

With reference to any one of the third aspect to the sixth possible implementation manner of the third aspect, in a seventh possible implementation manner, a configuration of the special subframe is a pre-stipulated special subframe configuration.

With reference to the seventh possible implementation manner of the third aspect, in an eighth possible implementation manner, for a downlink normal cyclic prefix, the configuration of the special subframe is a pre-stipulated special subframe configuration 4, and for a downlink extended cyclic prefix, the configuration of the special subframe is a pre-stipulated special subframe configuration 3.

With reference to the seventh possible implementation manner of the third aspect or the eighth possible implementation manner of the third aspect, in a ninth possible implementation manner, the special subframe is the subframe 1 and/or the subframe 6.

With reference to any one of the third aspect to the ninth possible implementation manner of the third aspect, in a tenth possible implementation manner, the sending module is further configured to send a second physical channel to the UE, where an uplink-downlink configuration of a radio frame for transmitting the second physical channel is different from an uplink-downlink configuration of the radio frame for transmitting the first information, and/or, a special subframe configuration of a special subframe in the radio frame for transmitting the second physical channel is different from a special subframe configuration of a special subframe in the radio frame for transmitting the first information; and the second physical channel includes any one of a physical downlink control channel PDCCH, an enhanced physical downlink control channel ePDCCH, a physical control format indicator channel PCFICH, a physical hybrid automatic repeat request indicator channel PHICH, and a physical downlink shared channel PDSCH.

With reference to any one of the third aspect to the tenth possible implementation manner of the third aspect, in an eleventh possible implementation manner, the system information is at least one of a master information block MIB, a master information block of a new UE category, a master information block of a new UE type, a master information block of coverage-enhanced UE, a master information block of delay-tolerant UE, and a machine type communication master information block MTC MIB; and
the first physical channel is a physical broadcast channel PBCH carrying the system information, and/or an enhanced PBCH carrying the system information.

With reference to any one of the third aspect to the tenth possible implementation manner of the third aspect, in a twelfth possible implementation manner, the system information is at least one of a system information block type 1 SIB1, a system information block type 2 SIB2, system information SI, a machine type communication system information block type 1 MTC SIB1, a machine type communication system information block type 2 MTC SIB2, machine type communication system information MTC SI, system information of a new UE category, system information of a new UE type, system information of low-cost UE, system information of coverage-enhanced UE, system information of delay-tolerant UE, and new machine type communication system information NEW MTC SIB; and
the first physical channel is a physical downlink shared channel PDSCH carrying the system information, and/or an enhanced PDSCH carrying the system information.

With reference to any one of the third aspect to the twelfth possible implementation manner of the third aspect, in a thirteenth possible implementation manner, the scheduling information is at least one of downlink control information DCI for scheduling the SIB1, DCI for scheduling the SIB2, DCI for scheduling the SI, DCI for scheduling the MTC SIB1, DCI for scheduling the MTC SIB2, DCI for scheduling the MTC SI, DCI for scheduling the system information of a new UE category, DCI for scheduling the system information of a new UE type, DCI for scheduling the system information of low-cost UE, DCI for scheduling the system information of coverage-enhanced UE, DCI for scheduling the system information of delay-tolerant UE, and DCI for scheduling the new MTC SIB; and
the first physical channel is a physical downlink control channel PDCCH carrying the scheduling information, and/or an enhanced PDCCH carrying the scheduling information.

According to a fourth aspect, an embodiment of the present invention provides an information determining apparatus in a TDD system, including:
a receiving module, configured to receive a first physical channel in multiple preset subframes in a radio frame, where the multiple preset subframes include at least a subframe 0 and a subframe 5, the first physical channel carries first information, and the first information is system information or scheduling information of the system information; and
a determining module, configured to determine the first information according to the received first physical channel.

In a first possible implementation manner, the multiple preset subframes further include either of a subframe 1 and a subframe 6.

In a second possible implementation manner, the multiple preset subframes further include a subframe 1 and a subframe 6.

With reference to any one of the fourth aspect to the second possible implementation manner of the fourth aspect, in a third possible implementation manner, the multiple preset subframes further include at least one of a subframe 3, a subframe 4, a subframe 7, a subframe 8, and a subframe 9.

With reference to the fourth aspect or the third possible implementation manner of the fourth aspect, in a fourth possible implementation manner, the multiple preset subframes further include the subframe 3, the subframe 4, the subframe 7, the subframe 8, and the subframe 9.

In a fifth possible implementation manner, the multiple preset subframes are all downlink subframes in a radio frame that is determined by a pre-stipulated uplink-downlink configuration; or
the multiple preset subframes further include all special subframes in a radio frame that is determined by a pre-stipulated uplink-downlink configuration; or
the multiple preset subframes further include all downlink subframes and special subframes, except a subframe 0 and a subframe 5, in a radio frame that is determined by a pre-stipulated uplink-downlink configuration; or
the multiple preset subframes are all subframes in the radio frame.

With reference to the fifth possible implementation manner of the fourth aspect, in a sixth possible implementation manner, that the multiple preset subframes further include all downlink subframes and special subframes, except a subframe 0 and a subframe 5, in a radio frame that is determined by a pre-stipulated uplink-downlink configuration includes:
the multiple preset subframes further include all downlink subframes and special subframes, except a subframe 0 and a subframe 5, in a radio frame that is determined by a pre-stipulated uplink-downlink configuration 5.

With reference to any one of the fourth aspect to the sixth possible implementation manner of the fourth aspect, in a seventh possible implementation manner, a configuration of the special subframe is a pre-stipulated special subframe configuration.

With reference to the seventh possible implementation manner of the fourth aspect, in an eighth possible implementation manner, for a downlink normal cyclic prefix, the configuration of the special subframe is a pre-stipulated special subframe configuration 4, and for a downlink extended cyclic prefix, the configuration of the special subframe is a pre-stipulated special subframe configuration 3.

With reference to the seventh possible implementation manner of the fourth aspect or the eighth possible implementation manner of the fourth aspect, in a ninth possible implementation manner, the special subframe is the subframe 1 and/or the subframe 6.

With reference to any one of the fourth aspect to the ninth possible implementation manner of the fourth aspect, in a tenth possible implementation manner, the receiving module is further configured to receive a second physical channel, where an uplink-downlink configuration of a radio frame for transmitting the second physical channel is different from an uplink-downlink configuration of the radio frame for transmitting the first information, and/or, a special subframe configuration of a special subframe in the radio frame for transmitting the second physical channel is different from a special subframe configuration of a special subframe in the radio frame for transmitting the first information; and the second physical channel includes any one of a physical downlink control channel PDCCH, an enhanced physical downlink control channel ePDCCH, a physical control format indicator channel PCFICH, a physical hybrid automatic repeat request indicator channel PHICH, and a physical downlink shared channel PDSCH.

With reference to any one of the fourth aspect to the tenth possible implementation manner of the fourth aspect, in an eleventh possible implementation manner, the system information is at least one of a master information block MIB, a master information block of a new UE category, a master information block of a new UE type, a master information block of coverage-enhanced UE, a master information block of delay-tolerant UE, and a machine type communication master information block MTC MIB; and
the first physical channel is a physical broadcast channel PBCH carrying the system information, and/or an enhanced PBCH carrying the system information.

With reference to any one of the fourth aspect to the tenth possible implementation manner of the fourth aspect, in a twelfth possible implementation manner, the system information is at least one of a system information block type 1 SIB1, a system information block type 2 SIB2, system information SI, a machine type communication system information block type 1 MTC SIB1, a machine type communication system information block type 2 MTC SIB2, machine type communication system information MTC SI, system information of a new UE category, system information of a new UE type, system information of low-cost UE, system information of coverage-enhanced UE, system information of delay-tolerant UE, and new machine type communication system information NEW MTC SIB; and
the first physical channel is a physical downlink shared channel PDSCH carrying the system information, and/or an enhanced PDSCH carrying the system information.

With reference to any one of the fourth aspect to the twelfth possible implementation manner of the fourth aspect, in a thirteenth possible implementation manner, the scheduling information is at least one of downlink control information DCI for scheduling the SIB1, DCI for scheduling the SIB2, DCI for scheduling the SI, DCI for scheduling the MTC SIB1, DCI for scheduling the MTC SIB2, DCI for scheduling the MTC SI, DCI for scheduling the system information of a new UE category, DCI for scheduling the system information of a new UE type, DCI for scheduling the system information of low-cost UE, DCI for scheduling the system information of coverage-enhanced UE, DCI for scheduling the system information of delay-tolerant UE, and DCI for scheduling the new MTC SIB; and
the first physical channel is a physical downlink control channel PDCCH carrying the scheduling information, and/or an enhanced PDCCH carrying the scheduling information.

According to a fifth aspect, an embodiment of the present invention provides a base station, including:
a processor, configured to map first information onto multiple preset subframes in a radio frame, where the multiple preset subframes include at least a subframe 0 and a subframe 5, and the first information is system information or scheduling information of the system information; and
a transmitter, configured to send a first physical channel to user equipment UE, where the first physical channel carries the first information.

In a first possible implementation manner, the multiple preset subframes further include either of a subframe 1 and a subframe 6.

In a second possible implementation manner, the multiple preset subframes further include a subframe 1 and a subframe 6.

With reference to any one of the fifth aspect to the second possible implementation manner of the fifth aspect, in a third possible implementation manner, the multiple preset subframes further include at least one of a subframe 3, a subframe 4, a subframe 7, a subframe 8, and a subframe 9.

With reference to the fifth aspect or the third possible implementation manner of the fifth aspect, in a fourth possible implementation manner, the multiple subframes further include the subframe 3, the subframe 4, the subframe 7, the subframe 8, and the subframe 9.

In a fifth possible implementation manner, the multiple preset subframes are all downlink subframes in a radio frame that is determined by a pre-stipulated uplink-downlink configuration; or
the multiple preset subframes further include all special subframes in a radio frame that is determined by a pre-stipulated uplink-downlink configuration; or
the multiple preset subframes further include all downlink subframes and special subframes, except a subframe 0 and a subframe 5, in a radio frame that is determined by a pre-stipulated uplink-downlink configuration; or
the multiple preset subframes are all subframes in the radio frame.

With reference to the fifth possible implementation manner of the fifth aspect, in a sixth possible implementation manner, that the multiple preset subframes further include all downlink subframes and special subframes, except a subframe 0 and a subframe 5, in a radio frame that is determined by a pre-stipulated uplink-downlink configuration includes:
the multiple preset subframes further include all downlink subframes and special subframes, except a subframe 0 and a subframe 5, in a radio frame that is determined by a pre-stipulated uplink-downlink configuration 5.

With reference to any one of the fifth aspect to the sixth possible implementation manner of the fifth aspect, in a seventh possible implementation manner, a configuration of the special subframe is a pre-stipulated special subframe configuration.

With reference to the seventh possible implementation manner of the fifth aspect, in an eighth possible implementation manner, for a downlink normal cyclic prefix, the configuration of the special subframe is a pre-stipulated special subframe configuration 4, and for a downlink extended cyclic prefix, the configuration of the special subframe is a pre-stipulated special subframe configuration 3.

With reference to the seventh possible implementation manner of the fifth aspect or the eighth possible implementation manner of the fifth aspect, in a ninth possible implementation manner, the special subframe is the subframe 1 and/or the subframe 6.

With reference to any one of the fifth aspect to the ninth possible implementation manner of the fifth aspect, in a tenth possible implementation manner, the transmitter is further configured to send a second physical channel to the UE, where an uplink-downlink configuration of a radio frame for transmitting the second physical channel is different from an uplink-downlink configuration of the radio frame for transmitting the first information, and/or, a special subframe configuration of a special subframe in the radio frame for transmitting the second physical channel is different from a special subframe configuration of a special subframe in the radio frame for transmitting the first information; and the second physical channel includes any one of a physical downlink control channel PDCCH, an enhanced physical downlink control channel ePDCCH, a physical control format indicator channel PCFICH, a physical hybrid automatic repeat request indicator channel PHICH, and a physical downlink shared channel PDSCH.

With reference to any one of the fifth aspect to the tenth possible implementation manner of the fifth aspect, in an eleventh possible implementation manner, the system information is at least one of a master information block MIB, a master information block of a new UE category, a master information block of a new UE type, a master information block of coverage-enhanced UE, a master information block of delay-tolerant UE, and a machine type communication master information block MTC MIB; and
the first physical channel is a physical broadcast channel PBCH carrying the system information, and/or an enhanced PBCH carrying the system information.

With reference to any one of the fifth aspect to the tenth possible implementation manner of the fifth aspect, in a twelfth possible implementation manner, the system information is at least one of a system information block type 1 SIB1, a system information block type 2 SIB2, system information SI, a machine type communication system information block type 1 MTC SIB1, a machine type communication system information block type 2 MTC SIB2, machine type communication system information MTC SI, system information of a new UE category, system information of a new UE type, system information of low-cost UE, system information of coverage-enhanced UE, system information of delay-tolerant UE, and new machine type communication system information NEW MTC SIB; and
the first physical channel is a physical downlink shared channel PDSCH carrying the system information, and/or an enhanced PDSCH carrying the system information.

With reference to any one of the fifth aspect to the twelfth possible implementation manner of the fifth aspect, in a thirteenth possible implementation manner, the scheduling information is at least one of downlink control information DCI for scheduling the SIB1, DCI for scheduling the SIB2, DCI for scheduling the SI, DCI for scheduling the MTC SIB1, DCI for scheduling the MTC SIB2, DCI for scheduling the MTC SI, DCI for scheduling the system information of a new UE category, DCI for scheduling the system information of a new UE type, DCI for scheduling the system information of low-cost UE, DCI for scheduling the system information of coverage-enhanced UE, DCI for scheduling the system information of delay-tolerant UE, and DCI for scheduling the new MTC SIB; and
the first physical channel is a physical downlink control channel PDCCH carrying the scheduling information, and/or an enhanced PDCCH carrying the scheduling information.

According to a sixth aspect, an embodiment of the present invention provides user equipment, including:
a receiver, configured to receive a first physical channel in multiple preset subframes in a radio frame, where the multiple preset subframes include at least a subframe 0 and a subframe 5, the first physical channel carries first information, and the first information is system information or scheduling information of the system information; and
a processor, configured to determine the first information according to the received first physical channel.

In a first possible implementation manner, the multiple preset subframes further include either of a subframe 1 and a subframe 6.

In a second possible implementation manner, the multiple preset subframes further include a subframe 1 and a subframe 6.

With reference to any one of the sixth aspect to the second possible implementation manner of the sixth aspect, in a third possible implementation manner, the multiple preset subframes further include at least one of a subframe 3, a subframe 4, a subframe 7, a subframe 8, and a subframe 9.

With reference to the sixth aspect or the third possible implementation manner of the sixth aspect, in a fourth possible implementation manner, the multiple preset subframes further include the subframe 3, the subframe 4, the subframe 7, the subframe 8, and the subframe 9.

In a fifth possible implementation manner, the multiple preset subframes are all downlink subframes in a radio frame that is determined by a pre-stipulated uplink-downlink configuration; or
the multiple preset subframes further include all special subframes in a radio frame that is determined by a pre-stipulated uplink-downlink configuration; or
the multiple preset subframes further include all downlink subframes and special subframes, except a subframe 0 and a subframe 5, in a radio frame that is determined by a pre-stipulated uplink-downlink configuration; or
the multiple preset subframes are all subframes in the radio frame.

With reference to the fifth possible implementation manner of the sixth aspect, in a sixth possible implementation manner, that the multiple preset subframes further include all downlink subframes and special subframes, except a subframe 0 and a subframe 5, in a radio frame that is determined by a pre-stipulated uplink-downlink configuration includes:
the multiple preset subframes further include all downlink subframes and special subframes, except a subframe 0 and a subframe 5, in a radio frame that is determined by a pre-stipulated uplink-downlink configuration 5.

With reference to any one of the sixth aspect to the sixth possible implementation manner of the sixth aspect, in a seventh possible implementation manner, a configuration of the special subframe is a pre-stipulated special subframe configuration.

With reference to the seventh possible implementation manner of the sixth aspect, in an eighth possible implementation manner, for a downlink normal cyclic prefix, the configuration of the special subframe is a pre-stipulated special subframe configuration 4, and for a downlink extended cyclic prefix, the configuration of the special subframe is a pre-stipulated special subframe configuration 3.

With reference to the seventh possible implementation manner of the sixth aspect or the eighth possible implementation manner of the sixth aspect, in a ninth possible implementation manner, the special subframe is the subframe 1 and/or the subframe 6.

With reference to any one of the sixth aspect to the ninth possible implementation manner of the sixth aspect, in a tenth possible implementation manner, the receiver is further configured to receive a second physical channel, where an uplink-downlink configuration of a radio frame for transmitting the second physical channel is different from an uplink-downlink configuration of the radio frame for transmitting the first information, and/or, a special subframe configuration of a special subframe in the radio frame for transmitting the second physical channel is different from a special subframe configuration of a special subframe in the radio frame for transmitting the first information; and the second physical channel includes any one of a physical downlink control channel PDCCH, an enhanced physical downlink control channel ePDCCH, a physical control format indicator channel PCFICH, a physical hybrid automatic repeat request indicator channel PHICH, and a physical downlink shared channel PDSCH.

With reference to any one of the sixth aspect to the tenth possible implementation manner of the sixth aspect, in an eleventh possible implementation manner, the system information is at least one of a master information block MIB, a master information block of a new UE category, a master information block of a new UE type, a master information block of coverage-enhanced UE, a master information block of delay-tolerant UE, and a machine type communication master information block MTC MIB; and
the first physical channel is a physical broadcast channel PBCH carrying the system information, and/or an enhanced PBCH carrying the system information.

With reference to any one of the sixth aspect to the tenth possible implementation manner of the third aspect, in a twelfth possible implementation manner, the system information is at least one of a system information block type 1 SIB1, a system information block type 2 SIB2, system information SI, a machine type communication system information block type 1 MTC SIB1, a machine type communication system information block type 2 MTC SIB2, machine type communication system information MTC SI, system information of a new UE category, system information of a new UE type, system information of low-cost UE, system information of coverage-enhanced UE, system information of delay-tolerant UE, and new machine type communication system information new MTC SIB; and
the first physical channel is a physical downlink shared channel PDSCH carrying the system information, and/or an enhanced PDSCH carrying the system information.

With reference to any one of the sixth aspect to the twelfth possible implementation manner of the sixth aspect, in a thirteenth possible implementation manner, the scheduling information is at least one of downlink control information DCI for scheduling the SIB1, DCI for scheduling the SIB2, DCI for scheduling the SI, DCI for scheduling the MTC SIB1, DCI for scheduling the MTC SIB2, DCI for scheduling the MTC SI, DCI for scheduling the system information of a new UE category, DCI for scheduling the system information of a new UE type, DCI for scheduling the system information of low-cost UE, DCI for scheduling the system information of coverage-enhanced UE, DCI for scheduling the system information of delay-tolerant UE, and DCI for scheduling the new MTC SIB; and
the first physical channel is a physical downlink control channel PDCCH carrying the scheduling information, and/or an enhanced PDCCH carrying the scheduling information.

According to a seventh aspect, an embodiment of the present invention provides a communications system, including: the information transmission apparatus in a TDD system described in the third aspect and the information determining apparatus in a TDD system described in the fourth aspect.

According to an eighth aspect, an embodiment of the present invention provides a communications system, including: the base station described in the fifth aspect and the user equipment described in the sixth aspect.

The embodiments of the present invention provide the information transmission method, the information determining method, and apparatuses in a TDD system, and the system. In the method, first information is mapped onto multiple preset subframes in a radio frame, where the multiple preset subframes include at least a subframe 0 and a subframe 5, and the first information is system information or scheduling information of system information; then a first physical channel is sent to user equipment UE, where the first physical channel carries the first information, so that the UE can detect the first physical channel in multiple preset subframes, and determine the first information, thereby decreasing detection complexity and power consumption of the UE.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and persons of ordinary skill in the art may still derive other drawings from these accompanying drawings without creative efforts.
FIG. 1 is a flowchart of an information transmission method in a TDD system according to an embodiment of the present invention;
FIG. 2 is a flowchart of an information determining method in a TDD system according to another embodiment of the present invention;
FIG. 3A is a schematic diagram of multiple preset subframes in a radio frame according to an embodiment of the present invention;
FIG. 3B is a schematic diagram of multiple preset subframes in a radio frame according to another embodiment of the present invention;
FIG. 4 is a schematic diagram of mapping of an enhanced PBCH in a TDD system according to an embodiment of the present invention;
FIG. 5 is a schematic structural diagram of an information transmission apparatus in a TDD system according to an embodiment of the present invention;
FIG. 6 is a schematic structural diagram of an information determining apparatus in a TDD system according to an embodiment of the present invention;
FIG. 7 is a schematic structural diagram of a base station according to an embodiment of the present invention; and
FIG. 8 is a schematic structural diagram of user equipment according to an embodiment of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

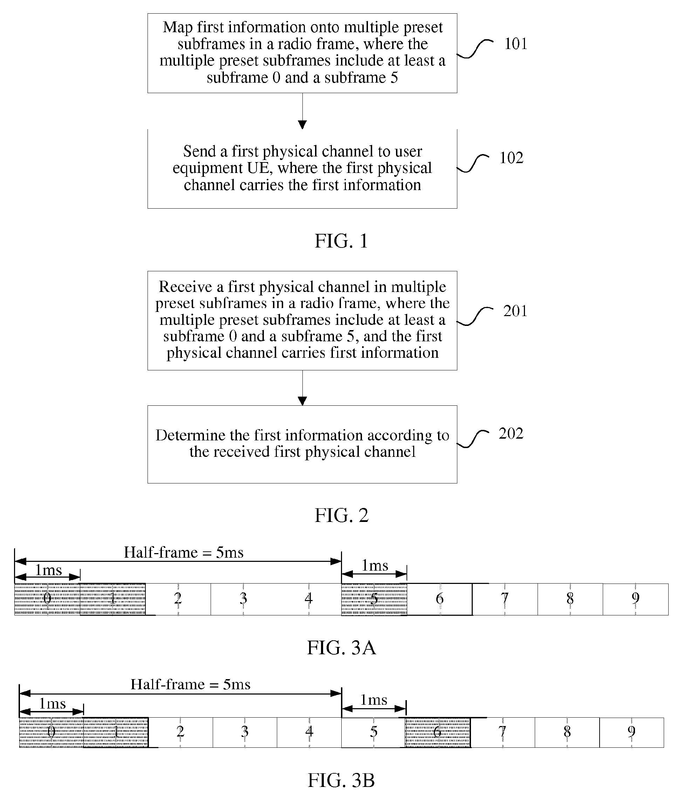

FIG. 1 is a flowchart of an information transmission method in a TDD system according to an embodiment of the present invention. As shown in FIG. 1, the method in this embodiment includes:
Step 101: Map first information onto multiple preset subframes in a radio frame, where the multiple preset subframes include at least a subframe 0 and a subframe 5.

In this embodiment, a base station may map the first information onto the multiple preset subframes in the radio frame, where the multiple preset subframes include at least the subframe 0 and the subframe 5, and the first information may be system information or scheduling information of system information.

For example, the multiple preset subframes may include the subframe 0 and the subframe 5; or, in addition to the subframe 0 and the subframe 5, the multiple preset subframes further include at least one of a subframe 1 and a subframe 6; or in addition to the subframe 0 and the subframe 5, the multiple preset subframes further include at least one of a subframe 3, a subframe 4, a subframe 7, a subframe 8, and a subframe 9.

Optionally, the multiple preset subframes are all downlink subframes in a radio frame that is determined by a pre-stipulated uplink-downlink configuration; or, in addition to the subframe 0 and the subframe 5, the multiple preset subframes further include all special subframes in a radio frame that is determined by a pre-stipulated uplink-downlink configuration; or, in addition to the subframe 0 and the subframe 5, the multiple preset subframes further include all downlink subframes and special subframes, except a subframe 0 and a subframe 5, in a radio frame that is determined by a pre-stipulated uplink-downlink configuration; or, the multiple preset subframes are all subframes in the radio frame.

It should be noted that, resources of an LTE system are divided into multiple radio frames in a time domain, where one radio frame includes 10 subframes that are arranged in the radio frame in a sequence of a subframe 0, a subframe 1 to a subframe 9. A length of each subframe is 1 millisecond, each subframe includes two timeslots, and a length of each timeslot is 0.5 milliseconds. When a cyclic prefix of a subframe is a normal (normal) cyclic prefix (cyclic prefix, CP for short), each timeslot includes seven orthogonal frequency division multiplexing symbols; or when a cyclic prefix of a subframe is an extended (extended) CP, each timeslot includes six orthogonal frequency division multiplexing symbols.

Step 102: Send a first physical channel to user equipment UE, where the first physical channel carries the first information.

In this embodiment, the base station sends the first physical channel to the UE, where the first physical channel carries the first information, where that the first information may be system information or scheduling information of system information may be specifically:
the system information may be at least one of a master information block MIB, a master information block of a new UE category, a master information block of coverage-enhanced UE, a master information block of delay-tolerant UE, and a machine type communication master information block MTC MIB; correspondingly, the first physical channel is a physical broadcast channel PBCH carrying the system information, and/or an enhanced PBCH carrying the system information.

For example, the system information is a master information block MIB, and correspondingly, the first physical channel is a physical broadcast channel PBCH carrying the MIB, and/or an enhanced PBCH carrying the MIB; or
the system information is a machine type communication master information block MTC MIB, and correspondingly, the first physical channel is a physical broadcast channel PBCH carrying the MTC MIB, and/or an enhanced PBCH carrying the MTC MIB.

Optionally, the system information is at least one of a system information block type 1 SIB1, a system information block type 2 SIB2, system information SI, a machine type communication system information block type 1 MTC SIB1, a machine type communication system information block type 2 MTC SIB2, machine type communication system information MTC SI, system information of a new UE category, system information of a new UE type, system information of low-cost UE, system information of coverage-enhanced UE, system information of delay-tolerant UE, and new machine type communication system information NEW MTC SIB; and correspondingly, the first physical channel is a physical downlink shared channel PDSCH carrying the system information, and/or an enhanced PDSCH carrying the system information.

For example, the system information is a system information block type 1 SIB1, and correspondingly, the first physical channel is a physical downlink shared channel PDSCH carrying the SIB1, and/or an enhanced PDSCH carrying the SIB1; or
the system information is a SIB2, and correspondingly, the first physical channel is a physical downlink shared channel PDSCH carrying the SIB2, and/or an enhanced PDSCH carrying the SIB2; or
the system information is SI, and correspondingly, the first physical channel is a physical downlink shared channel PDSCH carrying the SI, and/or an enhanced PDSCH carrying the SI; or
the system information is an MTC SIB1, and correspondingly, the first physical channel is a physical downlink shared channel PDSCH carrying the MTC SIB1, and/or an enhanced PDSCH carrying the MTC SIB1; or
the system information is an MTC SIB2, and correspondingly, the first physical channel is a physical downlink shared channel PDSCH carrying the MTC SIB2, and/or an enhanced PDSCH carrying the MTC SIB2; or
the system information is MTC SI, and correspondingly, the first physical channel is a physical downlink shared channel PDSCH carrying the MTC SI, and/or an enhanced PDSCH carrying the MTC SI; or
the system information is new MTC SI, and correspondingly, the first physical channel is a physical downlink shared channel PDSCH carrying the new MTC SI, and/or an enhanced PDSCH carrying the new MTC SI.

Further, based on the foregoing embodiment, the scheduling information may be at least one of downlink control information DCI for scheduling the SIB1, DCI for scheduling the SIB2, DCI for scheduling the SI, DCI for scheduling the MTC SIB1, DCI for scheduling the MTC SIB2, DCI for scheduling the MTC SI, DCI for scheduling the system information of a new UE category, DCI for scheduling the system information of a new UE type, DCI for scheduling the system information of low-cost UE, DCI for scheduling the system information of coverage-enhanced UE, DCI for scheduling the system information of delay-tolerant UE, and DCI for scheduling the new MTC SIB; and correspondingly, the first physical channel is a physical downlink control channel PDCCH carrying the foregoing DCI, and/or an enhanced PDCCH carrying the DCI.

For example, the scheduling information is DCI for scheduling a SIB1, and correspondingly, the first physical channel is a PDCCH carrying the DCI for scheduling a SIB 1, and/or an enhanced PDCCH carrying the DCI for scheduling a SIB1; or
the scheduling information is DCI for scheduling a SIB2, and correspondingly, the first physical channel is a PDCCH carrying the DCI for scheduling a SIB2, and/or an enhanced PDCCH carrying the DCI for scheduling a SIB2; or
the scheduling information is DCI for scheduling SI, and correspondingly, the first physical channel is a PDCCH carrying the DCI for scheduling SI, and/or an enhanced PDCCH carrying the DCI for scheduling SI; or
the scheduling information is DCI for scheduling an MTC SIB1, and correspondingly, the first physical channel is a PDCCH carrying the DCI for scheduling an MTC SIB1, and/or an enhanced PDCCH carrying the DCI for scheduling an MTC SIB1; or
the scheduling information is DCI for scheduling an MTC SIB2, and correspondingly, the first physical channel is a PDCCH carrying the DCI for scheduling an MTC SIB2, and/or an enhanced PDCCH carrying the DCI for scheduling an MTC SIB2; or
the scheduling information is DCI for scheduling MTC SI, and correspondingly, the first physical channel is a PDCCH carrying the DCI for scheduling MTC SI, and/or an enhanced PDCCH carrying the DCI for scheduling MTC SI; or
the scheduling information is the DCI for scheduling a new MTC SIB, and correspondingly, the first physical channel is a PDCCH carrying the DCI for scheduling a new MTC SIB, and/or an enhanced PDCCH carrying the DCI for scheduling a new MTC SIB.

In the information transmission method in a TDD system provided in this embodiment of the present invention, first information is mapped onto multiple preset subframes in a radio frame, where the multiple preset subframes include at least a subframe 0 and a subframe 5, and the first information is system information or scheduling information of system information; then a first physical channel is sent to user equipment UE, where the first physical channel carries the first information, so that the UE can detect the first physical channel in multiple preset subframes, and determine the first information, thereby decreasing detection complexity and power consumption of the UE.

Further, based on the foregoing embodiment, after step 102, the method may further include:
sending a second physical channel to the UE, where an uplink-downlink configuration of a radio frame for transmitting the second physical channel is different from an uplink-downlink configuration of the radio frame for transmitting the first information, and/or, a special subframe configuration of a special subframe in the radio frame for transmitting the second physical channel is different from a special subframe configuration of a special subframe in the radio frame for transmitting the first information; and the second physical channel includes any one of a physical downlink control channel PDCCH, an enhanced physical downlink control channel ePDCCH, a physical control format indicator channel PCFICH, a physical hybrid automatic repeat request indicator channel PHICH, and a physical downlink shared channel PDSCH.

FIG. 2 is a flowchart of an information determining method in a TDD system according to another embodiment of the present invention. As shown in FIG. 2, the method in this embodiment includes:
Step 201: Receive a first physical channel in multiple preset subframes in a radio frame, where the multiple preset subframes include at least a subframe 0 and a subframe 5, and the first physical channel carries first information.

Specifically, UE may receive the first physical channel in the multiple preset subframes in the radio frame, where the multiple preset subframes include at least the subframe 0 and the subframe 5.

For example, the multiple preset subframes may include the subframe 0 and the subframe 5; or, in addition to the subframe 0 and the subframe 5, the multiple preset subframes further include either of a subframe 1 and a subframe 6; or in addition to the subframe 0 and the subframe 5, the multiple preset subframes further include at least one of a subframe 3, a subframe 4, a subframe 7, a subframe 8, and a subframe 9.

Optionally, the multiple preset subframes are all downlink subframes in a radio frame that is determined by a pre-stipulated uplink-downlink configuration; or the multiple preset subframes further include all special subframes in a radio frame that is determined by a pre-stipulated uplink-downlink configuration; or the multiple preset subframes further include all downlink subframes and special subframes, except a subframe 0 and a subframe 5, in a radio frame that is determined by a pre-stipulated uplink-downlink configuration; or the multiple preset subframes are all subframes in the radio frame.

In this embodiment, the first information is system information or scheduling information of system information.

Specifically, the system information may be at least one of a master information block MIB and a machine type communication master information block MTC MIB; and correspondingly, the first physical channel is a physical broadcast channel PBCH carrying the system information, and/or an enhanced PBCH carrying the system information.

For example, the system information is a master information block MIB, and correspondingly, the first physical channel is a physical broadcast channel PBCH carrying the MIB, and/or an enhanced PBCH carrying the MIB; or
the system information is a machine type communication master information block MTC MIB, and correspondingly, the first physical channel is a physical broadcast channel PBCH carrying the MTC MIB, and/or an enhanced PBCH carrying the MTC MIB.

Optionally, the system information is at least one of a system information block type 1 SIB1, a system information block type 2 SIB2, system information SI, a machine type communication system information block type 1 MTC SIB1, a machine type communication system information block type 2 MTC SIB2, machine type communication system information MTC SI, system information of a new UE category, system information of a new UE type, system information of low-cost UE, system information of coverage-enhanced UE, system information of delay-tolerant UE, and new machine type communication system information new MTC SIB; and correspondingly, the first physical channel is a physical downlink shared channel PDSCH carrying the system information, and/or an enhanced PDSCH carrying the system information.

For example, the system information is a system information block type 1 SIB1, and correspondingly, the first physical channel is a physical downlink shared channel PDSCH carrying the SIB1, and/or an enhanced PDSCH carrying the SIB1; or
the system information is a SIB2, and correspondingly, the first physical channel is a physical downlink shared channel PDSCH carrying the SIB2, and/or an enhanced PDSCH carrying the SIB2; or
the system information is SI, and correspondingly, the first physical channel is a physical downlink shared channel PDSCH carrying the SI, and/or an enhanced PDSCH carrying the SI; or
the system information is an MTC SIB1, and correspondingly, the first physical channel is a physical downlink shared channel PDSCH carrying the MTC SIB1, and/or an enhanced PDSCH carrying the MTC SIB1; or
the system information is an MTC SIB2, and correspondingly, the first physical channel is a physical downlink shared channel PDSCH carrying the MTC SIB2, and/or an enhanced PDSCH carrying the MTC SIB2; or
the system information is MTC SI, and correspondingly, the first physical channel is a physical downlink shared channel PDSCH carrying the MTC SI, and/or an enhanced PDSCH carrying the MTC SI; or
the system information is new MTC SI, and correspondingly, the first physical channel is a physical downlink shared channel PDSCH carrying the new MTC SI, and/or an enhanced PDSCH carrying the new MTC SI.

Further, based on the foregoing embodiment, the scheduling information may be at least one of downlink control information DCI for scheduling the SIB1, DCI for scheduling the SIB2, DCI for scheduling the SI, DCI for scheduling the MTC SIB1, DCI for scheduling the MTC SIB2, DCI for scheduling the MTC SI, DCI for scheduling the system information of a new UE category, DCI for scheduling the system information of a new UE type, DCI for scheduling the system information of low-cost UE, DCI for scheduling the system information of coverage-enhanced UE, DCI for scheduling the system information of delay-tolerant UE, and DCI for scheduling the new MTC SIB; and correspondingly, the first physical channel is a physical downlink control channel PDCCH carrying the foregoing DCI, and/or an enhanced PDCCH carrying the DCI.

For example, the scheduling information is DCI for scheduling a SIB1, and correspondingly, the first physical channel is a PDCCH carrying the DCI for scheduling a SIB 1, and/or an enhanced PDCCH carrying the DCI for scheduling a SIB 1; or
the scheduling information is DCI for scheduling a SIB2, and correspondingly, the first physical channel is a PDCCH carrying the DCI for scheduling a SIB2, and/or an enhanced PDCCH carrying the DCI for scheduling a SIB2; or
the scheduling information is DCI for scheduling SI, and correspondingly, the first physical channel is a PDCCH carrying the DCI for scheduling SI, and/or an enhanced PDCCH carrying the DCI for scheduling SI; or
the scheduling information is DCI for scheduling an MTC SIB1, and correspondingly, the first physical channel is a PDCCH carrying the DCI for scheduling an MTC SIB1, and/or an enhanced PDCCH carrying the DCI for scheduling an MTC SIB1; or
the scheduling information is DCI for scheduling an MTC SIB2, and correspondingly, the first physical channel is a PDCCH carrying the DCI for scheduling an MTC SIB2, and/or an enhanced PDCCH carrying the DCI for scheduling an MTC SIB2; or
the scheduling information is DCI for scheduling MTC SI, and correspondingly, the first physical channel is a PDCCH carrying the DCI for scheduling MTC SI, and/or an enhanced PDCCH carrying the DCI for scheduling MTC SI; or
the scheduling information is DCI for scheduling a new MTC SIB, and correspondingly, the first physical channel is a PDCCH carrying the DCI for scheduling a new MTC SIB, and/or an enhanced PDCCH carrying the DCI for scheduling a new MTC SIB.

Step 202: Determine first information according to the received first physical channel.

In this embodiment, the UE receives the first physical channel in the multiple preset subframes in the radio frame, and determines the first information according to the received first physical channel.

It should be noted that, resources of an LTE system are divided into multiple radio frames in a time domain, where one radio frame includes 10 subframes that are arranged in the radio frame in a sequence of a subframe 0, a subframe 1 to a subframe 9.

In the information determining method in a TDD system provided in this embodiment of the present invention, a first physical channel is received in multiple preset subframes in a radio frame, where the multiple preset subframes include at least a subframe 0 and a subframe 5, the first physical channel carries first information, and the first information is system information or scheduling information of system information; then, the first information radio frame is determined according to the received first physical channel, so that the UE detects the first physical channel in the determined multiple subframes, so as to decrease detection complexity and power consumption of the UE.

Further, based on the foregoing embodiment, after step 202, the method further includes:
receiving a second physical channel, where an uplink-downlink configuration of a radio frame for transmitting the second physical channel is different from an uplink-downlink configuration of the radio frame for transmitting the first information, and/or, a special subframe configuration of a special subframe in the radio frame for transmitting the second physical channel is different from a special subframe configuration of a special subframe in the radio frame for transmitting the first information; and the second physical channel includes any one of a physical downlink control channel PDCCH, an enhanced physical downlink control channel ePDCCH, a physical control format indicator channel PCFICH, a physical hybrid automatic repeat request indicator channel PHICH, and a physical downlink shared channel PDSCH.

In the LTE TDD system, one radio frame may include 10 subframes, for example, a subframe 0 to a subframe 9, and the radio frame is formed by two half-frames with a length of 5 milliseconds, and each half-frame has 5 subframes with a length of 1 millisecond. In addition to the subframe 0 and the subframe 5, the multiple preset subframes may further include another subframe in the radio frame.

For example, the multiple preset subframes may further include either of the subframe 1 and the subframe 6.

FIG. 3A is a schematic diagram of multiple preset subframes in a radio frame according to an embodiment of the present invention. FIG. 3B is a schematic diagram of multiple preset subframes in a radio frame according to another embodiment of the present invention. As shown in FIG. 3A, first information may be mapped onto a subframe 0, a subframe 1, and a subframe 5 in a radio frame, or as shown in FIG. 3B, first information may be mapped onto a subframe 0, a subframe 5, and a subframe 6 in a radio frame.

Optionally, based on the foregoing embodiment, multiple subframes may further include a subframe 1 and a subframe 6. That is, the first information may be mapped onto the subframe 0, the subframe 1, the subframe 5, and the subframe 6 in the radio frame.

Further, based on the foregoing embodiment, the multiple preset subframes may further include at least one of a subframe 3, a subframe 4, a subframe 7, a subframe 8, and a subframe 9.

For example, in addition to the subframe 0, the subframe 1, the subframe 5, and the subframe 6, the multiple preset subframes may further include any one of the subframe 3, the subframe 4, the subframe 7, the subframe 8, and the subframe 9; or the multiple preset subframes may further include any two of the subframe 3, the subframe 4, the subframe 7, the subframe 8, and the subframe 9; or the multiple preset subframes may further include any three of all the subframe 3, the subframe 4, the subframe 7, the subframe 8, and the subframe 9; or the multiple preset subframes may further include all the subframe 3, the subframe 4, the subframe 7, the subframe 8, and the subframe 9.

Another implementation manner of this embodiment may further include any one of the following:

In a first implementation manner, the multiple preset subframes are all downlink subframes in a radio frame that is determined by a pre-stipulated uplink-downlink configuration (Uplink-downlink configuration).

For example, the multiple preset subframes may include all downlink subframes in a radio frame that is determined by a pre-stipulated uplink-downlink configuration 5. As shown in Table 1, the multiple subframes may be a subframe 0, a subframe 3, a subframe 4, a subframe 5, a subframe 6, a subframe 7, a subframe 8, and a subframe 9.

Specifically, for example, a MIB and/or an MTC MIB are mapped onto the subframe 0, the subframe 3, the subframe 4, the subframe 5, the subframe 6, the subframe 7, the subframe 8, and the subframe 9.

**Table 1**

| Uplink-downlink configuration | Period of a switchover point from downlink to uplink | Subframe number | | | | | | | | | |
|---|---|---|---|---|---|---|---|---|---|---|---|
| | | 0 | 1 | 2 | 3 | 4 | 5 | 6 | 7 | 8 | 9 |
| 0 | 5 ms | D | S | U | U | U | D | S | U | U | U |
| 1 | 5 ms | D | S | U | U | D | D | S | U | U | D |
| 2 | 5 ms | D | S | U | D | D | D | S | U | D | D |
| 3 | 10 ms | D | S | U | U | U | D | D | D | D | D |
| 4 | 10 ms | D | S | U | U | D | D | D | D | D | D |
| 5 | 10 ms | D | S | U | D | D | D | D | D | D | D |
| 6 | 5 ms | D | S | U | U | U | D | S | U | U | D |

"D" in Table 1 represents that this subframe is used for downlink transmission, "U" represents that this subframe is used for uplink transmission, and "S" represents that this subframe is a special subframe.

In a second implementation manner, the multiple preset subframes further include all special subframes in a radio frame that is determined by a pre-stipulated uplink-downlink configuration.

For example, as shown in Table 1, the multiple preset subframes further include all special subframes in a radio frame that is determined by a pre-stipulated uplink-downlink configuration 5, that is, the multiple preset subframes further include a subframe 1.

In a third implementation manner, the multiple preset subframes further include all downlink subframes and special subframes, except a subframe 0 and a subframe 5, in a radio frame that is determined by a pre-stipulated uplink-downlink configuration.

For example, the multiple preset subframes further include all downlink subframes and special subframes, except a subframe 0 and a subframe 5, in a radio frame that is determined by a pre-stipulated uplink-downlink configuration 5. As shown in Table 1, in addition to the subframe 0 and the subframe 5, the multiple preset subframes further include a subframe 1, a subframe 3, a subframe 4, a subframe 6, a subframe 7, a subframe 8, and a subframe 9.

Further, in this embodiment, for a downlink normal cyclic prefix, a special subframe configuration is a pre-stipulated special subframe configuration 4 (as shown in Table 2), and for a downlink extended cyclic prefix, a special subframe configuration is a pre-stipulated special subframe configuration 3 (as shown in Table 2).

Specifically, a MIB and/or an MTC MIB are mapped onto the subframe 0, the subframe 1, the subframe 3, the subframe 4, the subframe 5, the subframe 6, the subframe 7, the subframe 8, and the subframe 9.

In a fourth implementation manner, the multiple preset subframes are all subframes in the radio frame, that is, all 10 subframes in the radio frame.

It should be noted that, in the foregoing embodiment, if the multiple preset subframes in the radio frame include a special subframe, a special subframe configuration of the special subframe is a pre-stipulated special subframe configuration.

**Table 2**

| Special subframe configuration | Downlink normal CP | | | Downlink extended CP | | |
|---|---|---|---|---|---|---|
| | DwPTS | UpPTS | | DwPTS | UpPTS | |
| | | Uplink normal CP | Uplink extended CP | | Uplink normal CP | Uplink extended CP |
| 0 | 6592·*T*ₛ | | | 7680·*T*ₛ | | |
| 1 | 19760·*T*ₛ | | | 20480·*T*ₛ | 2192·*T*ₛ | 2560·*T*ₛ |
| 2 | 21952·*T*ₛ | 2192·*T*ₛ | 2560·*T*ₛ | 23040·*T*ₛ | | |
| 3 | 24144·*T*ₛ | | | 25600·*T*ₛ | | |
| 4 | 26336·*T*ₛ | | | 7680·*T*ₛ | 4384·*T*ₛ | 5120·*T*ₛ |
| 5 | 6592·*T*ₛ | 4384·*T*ₛ | 5120·*T*ₛ | 20480·*T*ₛ | | |
| 6 | 19760·*T*ₛ | | | 23040·*T*ₛ | | |
| 7 | 21952·*T*ₛ | | | - | - | - |
| 8 | 24144·*T*ₛ | | | - | - | - |

The special subframe configuration of the special subframe is a pre-stipulated special subframe configuration from the special subframe configuration 0 to the special subframe configuration 8 shown in Table 2. For example, for the downlink normal cyclic prefix, the configuration of the special subframe is the pre-stipulated special subframe configuration 4, and for the downlink extended cyclic prefix, the configuration of the special subframe is the pre-stipulated special subframe configuration 3. Further, the special subframe may be the subframe 1 and/or the subframe 6.

Specifically, one special subframe is formed by three fields, namely, UpPTS, GP, and DwPTS. Special subframe configurations corresponding to time lengths of the UpPTS and the DwPTS are shown in Table 2, where a total time length of the UpPTS, the GP, and the DwPTS is 1 millisecond.

For example, for the downlink normal CP, if the multiple preset subframes in the radio frame include a special subframe 1, a special subframe configuration of the special subframe 1 is a pre-stipulated special subframe configuration 4. Therefore, a structure of the special subframe 1 is:
DwPTS is 26336·*T*ₛ, and in the UpPTS, the uplink normal CP is 2192·*T*ₛ, and the uplink extended CP is 2560·*T*ₛ.

In the LTE TDD system, system information and/or scheduling information of system information is transmitted by using multiple preset subframes, thereby avoiding a large amount of power consumption of UE that is caused by the fact that the UE performs blind detection on the system information and/or the scheduling information of the system information.

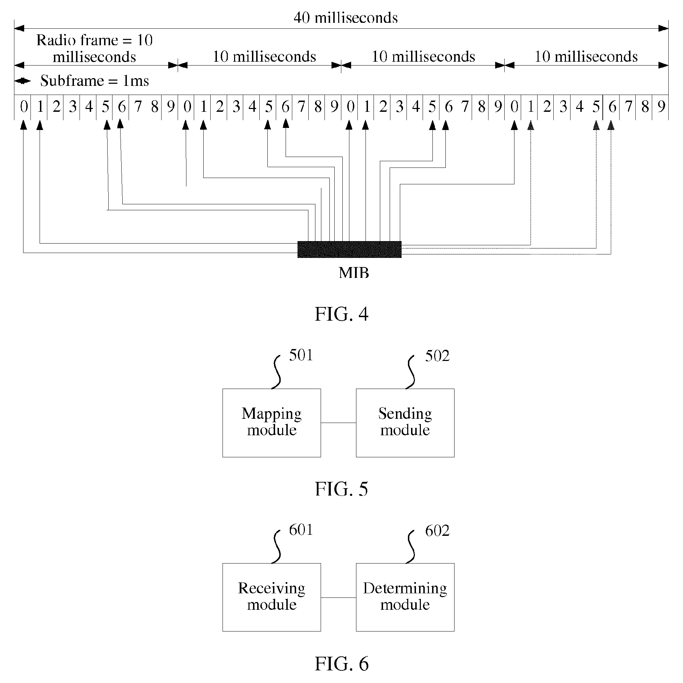

FIG. 4 is a schematic diagram of mapping of an enhanced PBCH in a TDD system according to an embodiment of the present invention. As shown in FIG. 4, in the LTE TDD system, an enhanced PBCH is mapped onto four consecutive radio frames, and in each radio frame of the four radio frames, a MIB carried in the enhanced PBCH is mapped onto a preset subframe 0, subframe 1, subframe 5, and subframe 6. That is, the enhanced PBCH not only includes an existing PBCH, but also includes repeated sending of a MIB. Further, special subframe configurations in the subframe 1 and the subframe 6 are pre-stipulated, so that the enhanced PBCH can map a MIB in a downlink orthogonal frequency division multiplexing symbol that is determined by the pre-stipulated special subframe configuration.

For UE, even if the UE does not know an uplink-downlink configuration of the TDD system, the UE can receive the enhanced PBCH in the preset subframe 0, subframe 1, subframe 5, and subframe 6 in each radio frame of the four radio frames. Further, the UE receives the enhanced PBCH according to the pre-stipulated special subframe configurations of the subframe 1 and the subframe 6, so as to determine the MIB carried in the enhanced PBCH.

FIG. 5 is a schematic structural diagram of an information transmission apparatus in a TDD system according to an embodiment of the present invention. As shown in FIG. 5, the information transmission apparatus in a TDD system includes a mapping module 501 and a sending module 502, where
the mapping module 501 is configured to map first information onto multiple preset subframes in a radio frame, where the multiple preset subframes include at least a subframe 0 and a subframe 5, and the first information is system information or scheduling information of system information; and
the sending module 502 is configured to send a first physical channel to user equipment UE, where the first physical channel carries the first information.

In the information transmission apparatus in a TDD system provided in this embodiment of the present invention, first information is mapped onto multiple preset subframes in a radio frame, where the multiple preset subframes include at least a subframe 0 and a subframe 5, and the first information is system information or scheduling information of system information; then a first physical channel is sent to user equipment UE, where the first physical channel carries the first information, so that the UE can detect the first physical channel in multiple preset subframes in a radio frame, and determine the first information according to the received first physical channel, thereby decreasing detection complexity and power consumption of the UE.

Based on the foregoing embodiment, the multiple preset subframes further include either of a subframe 1 and a subframe 6.

Optionally, the multiple preset subframes further include the subframe 1 and the subframe 6.

Further, based on the foregoing embodiment, the multiple preset subframes further include at least one of a subframe 3, a subframe 4, a subframe 7, a subframe 8, and a subframe 9.

Optionally, the multiple subframes further include the subframe 3, the subframe 4, the subframe 7, the subframe 8, and the subframe 9.

Based on the foregoing embodiment, the multiple preset subframes are all downlink subframes in a radio frame that is determined by a pre-stipulated uplink-downlink configuration; or
the multiple preset subframes further include all special subframes in a radio frame that is determined by a pre-stipulated uplink-downlink configuration; or
the multiple preset subframes further include all downlink subframes and special subframes, except a subframe 0 and a subframe 5, in a radio frame that is determined by a pre-stipulated uplink-downlink configuration; or
the multiple preset subframes are all subframes in the radio frame.

Further, based on the foregoing embodiment, that the multiple preset subframes further include all downlink subframes and special subframes, except a subframe 0 and a subframe 5, in a radio frame that is determined by a pre-stipulated uplink-downlink configuration includes:
the multiple preset subframes further include all downlink subframes and special subframes, except a subframe 0 and a subframe 5, in a radio frame that is determined by a pre-stipulated uplink-downlink configuration 5, that is, in addition to the subframe 0 and the subframe 5, the multiple preset subframes further include a subframe 1, a subframe 3, a subframe 4, a subframe 6, a subframe 7, a subframe 8, and a subframe 9.

Based on the foregoing embodiment, a configuration of the special subframe is a pre-stipulated special subframe configuration.

Further, based on the foregoing embodiment, for a downlink normal cyclic prefix, the configuration of the special subframe is a pre-stipulated special subframe configuration 4, and for a downlink extended cyclic prefix, the configuration of the special subframe is a pre-stipulated special subframe configuration 3.

Further, based on the foregoing embodiment, the special subframe is the subframe 1 and/or the subframe 6.

Based on the foregoing embodiment, the sending module 502 is further configured to send a second physical channel to the UE, where an uplink-downlink configuration of a radio frame for transmitting the second physical channel is different from an uplink-downlink configuration of the radio frame for transmitting the first information, and/or, a special subframe configuration of a special subframe in the radio frame for transmitting the second physical channel is different from a special subframe configuration of a special subframe in the radio frame for transmitting the first information; and the second physical channel includes any one of a physical downlink control channel PDCCH, an enhanced physical downlink control channel ePDCCH, a physical control format indicator channel PCFICH, a physical hybrid automatic repeat request indicator channel PHICH, and a physical downlink shared channel PDSCH.

Based on the foregoing embodiment, the system information is at least one of a master information block MIB, a master information block of a new UE category, a master information block of a new UE type, a master information block of coverage-enhanced UE, a master information block of delay-tolerant UE, and a machine type communication master information block MTC MIB; and
the first physical channel is a physical broadcast channel PBCH carrying the system information, and/or an enhanced PBCH carrying the system information.

Based on the foregoing embodiment, the system information is at least one of a system information block type 1 SIB1, a system information block type 2 SIB2, system information SI, a machine type communication system information block type 1 MTC SIB1, a machine type communication system information block type 2 MTC SIB2, machine type communication system information MTC SI, system information of a new UE category, system information of a new UE type, system information of low-cost UE, system information of coverage-enhanced UE, system information of delay-tolerant UE, and new machine type communication system information NEW MTC SIB; and
the first physical channel is a physical downlink shared channel PDSCH carrying the system information, and/or an enhanced PDSCH carrying the system information.

Based on the foregoing embodiment, the scheduling information is at least one of downlink control information DCI for scheduling the SIB1, DCI for scheduling the SIB2, DCI for scheduling the SI, DCI for scheduling the MTC SIB1, DCI for scheduling the MTC SIB2, DCI for scheduling the MTC SI, DCI for scheduling the system information of a new UE category, DCI for scheduling the system information of a new UE type, DCI for scheduling the system information of low-cost UE, DCI for scheduling the system information of coverage-enhanced UE, DCI for scheduling the system information of delay-tolerant UE, and DCI for scheduling the new MTC SIB; and
the first physical channel is a physical downlink control channel PDCCH carrying the DCI, and/or an enhanced PDCCH carrying the DCI.

FIG. 6 is a schematic structural diagram of an information determining apparatus in a TDD system according to an embodiment of the present invention. As shown in FIG. 6, the information determining apparatus in the TDD system includes a receiving module 601 and a determining module 602, where
the receiving module 601 is configured to receive a first physical channel in multiple preset subframes in a radio frame, where the multiple preset subframes include at least a subframe 0 and a subframe 5, the first physical channel carries first information, and the first information is system information or scheduling information of system information; and
the determining module 602 is configured to determine the first information according to the received first physical channel.

In the information determining apparatus in a TDD system provided in this embodiment of the present invention, a first physical channel is received in multiple preset subframes in a radio frame, where the multiple preset subframes include at least a subframe 0 and a subframe 5, the first physical channel carries first information, and the first information is system information or scheduling information of system information; then, the first information is determined according to the received first physical channel, so as to decrease detection complexity and power consumption of the UE.

Based on the foregoing embodiment, the multiple preset subframes further include either of a subframe 1 and a subframe 6.

Optionally, based on the foregoing embodiment, the multiple preset subframes further include the subframe 1 and the subframe 6.

Based on the foregoing embodiment, the multiple preset subframes further include at least one of a subframe 3, a subframe 4, a subframe 7, a subframe 8, and a subframe 9.

Optionally, based on the foregoing embodiment, the multiple preset subframes further include the subframe 3, the subframe 4, the subframe 7, the subframe 8, and the subframe 9.

Further, based on the foregoing embodiment, the multiple preset subframes are all downlink subframes in a radio frame that is determined by a pre-stipulated uplink-downlink configuration; or
the multiple preset subframes further include all special subframes in a radio frame that is determined by a pre-stipulated uplink-downlink configuration; or
the multiple preset subframes further include all downlink subframes and special subframes, except a subframe 0 and a subframe 5, in a radio frame that is determined by a pre-stipulated uplink-downlink configuration; or
the multiple preset subframes are all subframes in the radio frame.

Based on the foregoing embodiment, that the multiple preset subframes further include all downlink subframes and special subframes, except a subframe 0 and a subframe 5, in a radio frame that is determined by a pre-stipulated uplink-downlink configuration includes:
the multiple preset subframes further include all downlink subframes and special subframes, except a subframe 0 and a subframe 5, in a radio frame that is determined by a pre-stipulated uplink-downlink configuration 5, that is, in addition to the subframe 0 and the subframe 5, the multiple preset subframes further include a subframe 1, a subframe 3, a subframe 4, a subframe 6, a subframe 7, a subframe 8, and a subframe 9.

Based on the foregoing embodiment, a configuration of the special subframe is a pre-stipulated special subframe configuration.

Further, based on the foregoing embodiment, for a downlink normal cyclic prefix, the configuration of the special subframe is a pre-stipulated special subframe configuration 4, and for a downlink extended cyclic prefix, the configuration of the special subframe is a pre-stipulated special subframe configuration 3.

Further, based on the foregoing embodiment, the special subframe is the subframe 1 and/or the subframe 6.

Optionally, based on the foregoing embodiment, the receiving module 601 is further configured to receive a second physical channel, where an uplink-downlink configuration of a radio frame for transmitting the second physical channel is different from an uplink-downlink configuration of the radio frame for transmitting the first information, and/or, a special subframe configuration of a special subframe in the radio frame for transmitting the second physical channel is different from a special subframe configuration of a special subframe in the radio frame for transmitting the first information; and the second physical channel includes any one of a physical downlink control channel PDCCH, an enhanced physical downlink control channel ePDCCH, a physical control format indicator channel PCFICH, a physical hybrid automatic repeat request indicator channel PHICH, and a physical downlink shared channel PDSCH.

Further, based on the foregoing embodiment, the system information is at least one of a master information block MIB, a master information block of a new UE category, a master information block of a new UE type, a master information block of coverage-enhanced UE, a master information block of delay-tolerant UE, and a machine type communication master information block MTC MIB; and
the first physical channel is a physical broadcast channel PBCH carrying the system information, and/or an enhanced PBCH carrying the system information.

Based on the foregoing embodiment, the system information is at least one of a system information block type 1 SIB1, a system information block type 2 SIB2, system information SI, a machine type communication system information block type 1 MTC SIB1, a machine type communication system information block type 2 MTC SIB2, machine type communication system information MTC SI, system information of a new UE category, system information of a new UE type, system information of low-cost UE, system information of coverage-enhanced UE, system information of delay-tolerant UE, and new machine type communication system information NEW MTC SIB; and
the first physical channel is a physical downlink shared channel PDSCH carrying the system information, and/or an enhanced PDSCH carrying the system information.

Based on the foregoing embodiment, the scheduling information is at least one of downlink control information DCI for scheduling the SIB1, DCI for scheduling the SIB2, DCI for scheduling the SI, DCI for scheduling the MTC SIB1, DCI for scheduling the MTC SIB2, DCI for scheduling the MTC SI, DCI for scheduling the system information of a new UE category, DCI for scheduling the system information of a new UE type, DCI for scheduling the system information of low-cost UE, DCI for scheduling the system information of coverage-enhanced UE, DCI for scheduling the system information of delay-tolerant UE, and DCI for scheduling the new MTC SIB; and
the first physical channel is a physical downlink control channel PDCCH carrying the DCI, and/or an enhanced PDCCH carrying the DCI.

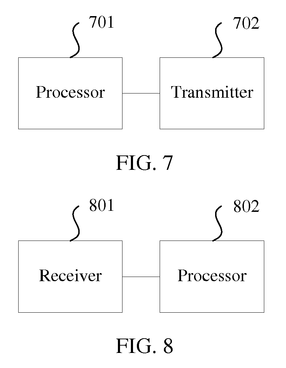

FIG. 7 is a schematic structural diagram of a base station according to an embodiment of the present invention. As shown in FIG. 7, the base station includes a processor 701 and a transmitter 702, where
the processor 701 is configured to map first information onto multiple preset subframes in a radio frame, where the multiple preset subframes include at least a sub frame 0 and a subframe 5, and the first information is system information or scheduling information of system information; and
the transmitter 702 is configured to send a first physical channel to user equipment UE, where the first physical channel carries the first information.

In the base station provided in this embodiment of the present invention, first information is mapped onto multiple preset subframes in a radio frame, where the multiple preset subframes include at least a subframe 0 and a subframe 5, and the first information is system information or scheduling information of system information; then a first physical channel is sent to user equipment UE, where the first physical channel carries the first information, so that the UE receives the first physical channel in multiple preset subframes in a radio frame, and determines the first information according to the received first physical channel, thereby decreasing detection complexity and power consumption of the UE.

Based on the foregoing embodiment, the multiple preset subframes further include either of a subframe 1 and a subframe 6.

Optionally, based on the foregoing embodiment, the multiple preset subframes further include the subframe 1 and the subframe 6.

Based on the foregoing embodiment, the multiple preset subframes further include at least one of a subframe 3, a subframe 4, a subframe 7, a subframe 8, and a subframe 9.

Optionally, based on the foregoing embodiment, the multiple subframes further include the subframe 3, the subframe 4, the subframe 7, the subframe 8, and the subframe 9.

Based on the foregoing embodiment, the multiple preset subframes are all downlink subframes in a radio frame that is determined by a pre-stipulated uplink-downlink configuration; or
the multiple preset subframes further include all special subframes in a radio frame that is determined by a pre-stipulated uplink-downlink configuration; or
the multiple preset subframes further include all downlink subframes and special subframes, except a subframe 0 and a subframe 5, in a radio frame that is determined by a pre-stipulated uplink-downlink configuration; or
the multiple preset subframes are all subframes in the radio frame.

Further, based on the foregoing embodiment, that the multiple preset subframes further include all downlink subframes and special subframes, except a subframe 0 and a subframe 5, in a radio frame that is determined by a pre-stipulated uplink-downlink configuration includes:
the multiple preset subframes further include all downlink subframes and special subframes, except a subframe 0 and a subframe 5, in a radio frame that is determined by a pre-stipulated uplink-downlink configuration 5, that is, in addition to the subframe 0 and the subframe 5, the multiple preset subframes further include a subframe 1, a subframe 3, a subframe 4, a subframe 6, a subframe 7, a subframe 8, and a subframe 9.

Based on the foregoing embodiment, a configuration of the special subframe is a pre-stipulated special subframe configuration.

Further, based on the foregoing embodiment, for a downlink normal cyclic prefix, the configuration of the special subframe is a pre-stipulated special subframe configuration 4, and for a downlink extended cyclic prefix, the configuration of the special subframe is a pre-stipulated special subframe configuration 3.

Optionally, based on the foregoing embodiment, the special subframe is the subframe 1 and/or the subframe 6.

Further, based on the foregoing embodiment, the transmitter 702 is further configured to send a second physical channel to the UE, where an uplink-downlink configuration of a radio frame for transmitting the second physical channel is different from an uplink-downlink configuration of the radio frame for transmitting the first information, and/or, a special subframe configuration of a special subframe in the radio frame for transmitting the second physical channel is different from a special subframe configuration of a special subframe in the radio frame for transmitting the first information; and the second physical channel includes any one of a physical downlink control channel PDCCH, an enhanced physical downlink control channel ePDCCH, a physical control format indicator channel PCFICH, a physical hybrid automatic repeat request indicator channel PHICH, and a physical downlink shared channel PDSCH.

Based on the foregoing embodiment, the system information is at least one of a master information block MIB, a master information block of a new UE category, a master information block of a new UE type, a master information block of coverage-enhanced UE, a master information block of delay-tolerant UE, and a machine type communication master information block MTC MIB; and
the first physical channel is a physical broadcast channel PBCH carrying the system information, and/or an enhanced PBCH carrying the system information.

Further, based on the foregoing embodiment, the system information is at least one of a system information block type 1 SIB1, a system information block type 2 SIB2, system information SI, a machine type communication system information block type 1 MTC SIB1, a machine type communication system information block type 2 MTC SIB2, machine type communication system information MTC SI, system information of a new UE category, system information of a new UE type, system information of low-cost UE, system information of coverage-enhanced UE, system information of delay-tolerant UE, and new machine type communication system information NEW MTC SIB; and
the first physical channel is a physical downlink shared channel PDSCH carrying the system information, and/or an enhanced PDSCH carrying the system information.

Based on the foregoing embodiment, the scheduling information is at least one of downlink control information DCI for scheduling the SIB1, DCI for scheduling the SIB2, DCI for scheduling the SI, DCI for scheduling the MTC SIB1, DCI for scheduling the MTC SIB2, DCI for scheduling the MTC SI, DCI for scheduling the system information of a new UE category, DCI for scheduling the system information of a new UE type, DCI for scheduling the system information of low-cost UE, DCI for scheduling the system information of coverage-enhanced UE, DCI for scheduling the system information of delay-tolerant UE, and DCI for scheduling the new MTC SIB; and
the first physical channel is a physical downlink control channel PDCCH carrying the DCI, and/or an enhanced PDCCH carrying the DCI.

FIG. 8 is a schematic structural diagram of user equipment according to an embodiment of the present invention. As shown in FIG. 8, the base station includes a receiver 801 and a processor 802, where
the receiver 801 is configured to receive a first physical channel in multiple preset subframes in a radio frame, where the multiple preset subframes include at least a subframe 0 and a subframe 5, the first physical channel carries first information, and the first information is system information or scheduling information of system information; and
the processor 802 is configured to determine the first information according to the received first physical channel.

In the user equipment provided in this embodiment of the present invention, a first physical channel is received in multiple preset subframes in a radio frame, where the multiple preset subframes include at least a subframe 0 and a subframe 5, the first physical channel carries first information, and the first information is system information or scheduling information of system information; then, the first information is determined according to the received first physical channel, so as to decrease detection complexity and power consumption of the UE.

Based on the foregoing embodiment, the multiple preset subframes further include either of a subframe 1 and a subframe 6.

Optionally, based on the foregoing embodiment, the multiple preset subframes further include the subframe 1 and the subframe 6.

Based on the foregoing embodiment, the multiple preset subframes further include at least one of a subframe 3, a subframe 4, a subframe 7, a subframe 8, and a subframe 9.

Optionally, based on the foregoing embodiment, the multiple preset subframes further include the subframe 3, the subframe 4, the subframe 7, the subframe 8, and the subframe 9.

Based on the foregoing embodiment, the multiple preset subframes include all downlink subframes in a radio frame that is determined by a pre-stipulated uplink-downlink configuration; or
the multiple preset subframes further include all special subframes in a radio frame that is determined by a pre-stipulated uplink-downlink configuration; or
the multiple preset subframes further include all downlink subframes and special subframes, except a subframe 0 and a subframe 5, in a radio frame that is determined by a pre-stipulated uplink-downlink configuration; or
the multiple preset subframes are all subframes in the radio frame.

Further, based on the foregoing embodiment, that the multiple preset subframes further include all downlink subframes and special subframes, except a subframe 0 and a subframe 5, in a radio frame that is determined by a pre-stipulated uplink-downlink configuration includes:
the multiple preset subframes further include all downlink subframes and special subframes, except a subframe 0 and a subframe 5, in a radio frame that is determined by a pre-stipulated uplink-downlink configuration 5, that is, in addition to the subframe 0 and the subframe 5, the multiple preset subframes further include a subframe 1, a subframe 3, a subframe 4, a subframe 6, a subframe 7, a subframe 8, and a subframe 9.

Based on the foregoing embodiment, a configuration of the special subframe is a pre-stipulated special subframe configuration.

Further, based on the foregoing embodiment, for a downlink normal cyclic prefix, the configuration of the special subframe is a pre-stipulated special subframe configuration 4, and for a downlink extended cyclic prefix, the configuration of the special subframe is a pre-stipulated special subframe configuration 3.

Based on the foregoing embodiment, the special subframe is the subframe 1 and/or the subframe 6.

Based on the foregoing embodiment, the receiver 801 is further configured to receive a second physical channel, where an uplink-downlink configuration of a radio frame for transmitting the second physical channel is different from an uplink-downlink configuration of the radio frame for transmitting the first information, and/or, a special subframe configuration of a special subframe in the radio frame for transmitting the second physical channel is different from a special subframe configuration of a special subframe in the radio frame for transmitting the first information; and the second physical channel includes any one of a physical downlink control channel PDCCH, an enhanced physical downlink control channel ePDCCH, a physical control format indicator channel PCFICH, a physical hybrid automatic repeat request indicator channel PHICH, and a physical downlink shared channel PDSCH.

Based on the foregoing embodiment, the system information is at least one of a master information block MIB, a master information block of a new UE category, a master information block of a new UE type, a master information block of coverage-enhanced UE, a master information block of delay-tolerant UE, and a machine type communication master information block MTC MIB; and
the first physical channel is a physical broadcast channel PBCH carrying the system information, and/or an enhanced PBCH carrying the system information.

Based on the foregoing embodiment, the system information is at least one of a system information block type 1 SIB1, a system information block type 2 SIB2, system information SI, a machine type communication system information block type 1 MTC SIB1, a machine type communication system information block type 2 MTC SIB2, machine type communication system information MTC SI, system information of a new UE category, system information of a new UE type, system information of low-cost UE, system information of coverage-enhanced UE, system information of delay-tolerant UE, and new machine type communication system information new MTC SIB; and
the first physical channel is a physical downlink shared channel PDSCH carrying the system information, and/or an enhanced PDSCH carrying the system information.

Based on the foregoing embodiment, the scheduling information is at least one of downlink control information DCI for scheduling the SIB1, DCI for scheduling the SIB2, DCI for scheduling the SI, DCI for scheduling the MTC SIB1, DCI for scheduling the MTC SIB2, DCI for scheduling the MTC SI, DCI for scheduling the system information of a new UE category, DCI for scheduling the system information of a new UE type, DCI for scheduling the system information of low-cost UE, DCI for scheduling the system information of coverage-enhanced UE, DCI for scheduling the system information of delay-tolerant UE, and DCI for scheduling the new MTC SIB; and
the first physical channel is a physical downlink control channel PDCCH carrying the DCI, and/or an enhanced PDCCH carrying the DCI.

Based on the foregoing embodiments, an embodiment provides a communications system, including the information transmission apparatus in a TDD system shown in FIG. 5 and the information determining apparatus in a TDD system shown in FIG. 6.

Based on the foregoing embodiments, an embodiment provides a communications system, including the base station shown in FIG. 7 and the user equipment shown in FIG. 8.

Persons of ordinary skill in the art may understand that all or some of the steps of the method embodiments may be implemented by a program instructing related hardware. The program may be stored in a computer-readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. An information transmission method in a TDD system, comprising:
mapping first information onto multiple preset subframes in a radio frame, wherein the multiple preset subframes comprise at least a subframe 0 and a subframe 5, and the first information is system information or scheduling information of the system information; and
sending a first physical channel to user equipment UE, wherein the first physical channel carries the first information.

2. The method according to claim 1, wherein the multiple preset subframes further comprise either of a subframe 1 and a subframe 6.

3. The method according to claim 1, wherein the multiple preset subframes further comprise a subframe 1 and a subframe 6.

4. The method according to any one of claims 1 to 3, wherein the multiple preset subframes further comprise at least one of a subframe 3, a subframe 4, a subframe 7, a subframe 8, and a subframe 9.

5. The method according to any one of claims 1 to 4, wherein the multiple subframes further comprise the subframe 3, the subframe 4, the subframe 7, the subframe 8, and the subframe 9.

6. The method according to claim 1, wherein
the multiple preset subframes are all downlink subframes in a radio frame that is determined by a pre-stipulated uplink-downlink configuration; or
the multiple preset subframes further comprise all special subframes in a radio frame that is determined by a pre-stipulated uplink-downlink configuration; or
the multiple preset subframes further comprise all downlink subframes and special subframes, except a subframe 0 and a subframe 5, in a radio frame that is determined by a pre-stipulated uplink-downlink configuration; or
the multiple preset subframes are all subframes in the radio frame.

7. The method according to claim 6, wherein that the multiple preset subframes further comprise all downlink subframes and special subframes, except a subframe 0 and a subframe 5, in a radio frame that is determined by a pre-stipulated uplink-downlink configuration comprises:
the multiple preset subframes further comprise all downlink subframes and special subframes, except a subframe 0 and a subframe 5, in a radio frame that is determined by a pre-stipulated uplink-downlink configuration 5.

8. The method according to any one of claims 1 to 7, wherein
a configuration of the special subframe is a pre-stipulated special subframe configuration.

9. The method according to claim 8, wherein for a downlink normal cyclic prefix, the configuration of the special subframe is a pre-stipulated special subframe configuration 4, and for a downlink extended cyclic prefix, the configuration of the special subframe is a pre-stipulated special subframe configuration 3.

10. The method according to claim 8 or 9, wherein
the special subframe is the subframe 1 and/or the subframe 6.

11. The method according to any one of claims 1 to 10, wherein after the sending a first physical channel to user equipment UE, the method further comprises:
sending a second physical channel to the UE, wherein an uplink-downlink configuration of a radio frame for transmitting the second physical channel is different from an uplink-downlink configuration of the radio frame for transmitting the first information, and/or, a special subframe configuration of a special subframe in the radio frame for transmitting the second physical channel is different from a special subframe configuration of a special subframe in the radio frame for transmitting the first information; and the second physical channel comprises any one of a physical downlink control channel PDCCH, an enhanced physical downlink control channel ePDCCH, a physical control format indicator channel PCFICH, a physical hybrid automatic repeat request indicator channel PHICH, and a physical downlink shared channel PDSCH.

12. The method according to any one of claims 1 to 11, wherein the system information is at least one of a master information block MIB, a master information block of a new UE category, a master information block of a new UE type, a master information block of coverage-enhanced UE, a master information block of delay-tolerant UE, and a machine type communication master information block MTC MIB; and
the first physical channel is a physical broadcast channel PBCH carrying the system information, and/or an enhanced PBCH carrying the system information.

13. The method according to claims 1 to 11, wherein the system information is at least one of a system information block type 1 SIB1, a system information block type 2 SIB2, system information SI, a machine type communication system information block type 1 MTC SIB1, a machine type communication system information block type 2 MTC SIB2, machine type communication system information MTC SI, system information of a new UE category, system information of a new UE type, system information of low-cost UE, system information of coverage-enhanced UE, system information of delay-tolerant UE, and new machine type communication system information NEW MTC SIB; and
the first physical channel is a physical downlink shared channel PDSCH carrying the system information, and/or an enhanced PDSCH carrying the system information.

14. The method according to any one of claims 1 to 13, wherein the scheduling information is at least one of downlink control information DCI for scheduling the SIB1, DCI for scheduling the SIB2, DCI for scheduling the SI, DCI for scheduling the MTC SIB1, DCI for scheduling the MTC SIB2, DCI for scheduling the MTC SI, DCI for scheduling the system information of a new UE category, DCI for scheduling the system information of a new UE type, DCI for scheduling the system information of low-cost UE, DCI for scheduling the system information of coverage-enhanced UE, DCI for scheduling the system information of delay-tolerant UE, and DCI for scheduling the new MTC SIB; and
the first physical channel is a physical downlink control channel PDCCH carrying the scheduling information, and/or an enhanced PDCCH carrying the scheduling information.

15. An information determining method in a TDD system, comprising:
receiving a first physical channel in multiple preset subframes in a radio frame, wherein the multiple preset subframes comprise at least a subframe 0 and a sub frame 5, the first physical channel carries first information, and the first information is system information or scheduling information of the system information; and
determining the first information according to the received first physical channel.

16. The method according to claim 15, wherein the multiple preset subframes further comprise either of a subframe 1 and a subframe 6.

17. The method according to claim 15, wherein the multiple preset subframes further comprise a subframe 1 and a subframe 6.

18. The method according to any one of claims 15 to 17, wherein the multiple preset subframes further comprise at least one of a subframe 3, a subframe 4, a subframe 7, a subframe 8, and a subframe 9.

19. The method according to any one of claims 15 to 18, wherein the multiple preset subframes further comprise the subframe 3, the subframe 4, the subframe 7, the subframe 8, and the subframe 9.

20. The method according to claim 15, wherein
the multiple preset subframes are all downlink subframes in a radio frame that is determined by a pre-stipulated uplink-downlink configuration; or
the multiple preset subframes further comprise all special subframes in a radio frame that is determined by a pre-stipulated uplink-downlink configuration; or
the multiple preset subframes further comprise all downlink subframes and special subframes, except a subframe 0 and a subframe 5, in a radio frame that is determined by a pre-stipulated uplink-downlink configuration; or
the multiple preset subframes are all subframes in the radio frame.

21. The method according to claim 20, wherein that the multiple preset subframes further comprise all downlink subframes and special subframes, except a subframe 0 and a subframe 5, in a radio frame that is determined by a pre-stipulated uplink-downlink configuration comprises:
the multiple preset subframes further comprise all downlink subframes and special subframes, except a subframe 0 and a subframe 5, in a radio frame that is determined by a pre-stipulated uplink-downlink configuration 5.

22. The method according to any one of claims 15 to 21, wherein
a configuration of the special subframe is a pre-stipulated special subframe configuration.

23. The method according to claim 22, wherein for a downlink normal cyclic prefix, the configuration of the special subframe is a pre-stipulated special subframe configuration 4, and for a downlink extended cyclic prefix, the configuration of the special subframe is a pre-stipulated special subframe configuration 3.

24. The method according to claim 22 or 23, wherein
the special subframe is the subframe 1 and/or the subframe 6.

25. The method according to any one of claims 15 to 24, wherein after the receiving a first physical channel in multiple preset subframes in a radio frame, the method further comprises:
receiving a second physical channel, wherein an uplink-downlink configuration of a radio frame for transmitting the second physical channel is different from an uplink-downlink configuration of the radio frame for transmitting the first information, and/or, a special subframe configuration of a special subframe in the radio frame for transmitting the second physical channel is different from a special subframe configuration of a special subframe in the radio frame for transmitting the first information; and the second physical channel comprises any one of a physical downlink control channel PDCCH, an enhanced physical downlink control channel ePDCCH, a physical control format indicator channel PCFICH, a physical hybrid automatic repeat request indicator channel PHICH, and a physical downlink shared channel PDSCH.

26. The method according to any one of claims 15 to 25, wherein the system information is at least one of a master information block MIB, a master information block of a new UE category, a master information block of a new UE type, a master information block of coverage-enhanced UE, a master information block of delay-tolerant UE, and a machine type communication master information block MTC MIB; and
the first physical channel is a physical broadcast channel PBCH carrying the system information, and/or an enhanced PBCH carrying the system information.

27. The method according to claims 15 to 25, wherein the system information is at least one of a system information block type 1 SIB1, a system information block type 2 SIB2, system information SI, a machine type communication system information block type 1 MTC SIB1, a machine type communication system information block type 2 MTC SIB2, machine type communication system information MTC SI, system information of a new UE category, system information of a new UE type, system information of low-cost UE, system information of coverage-enhanced UE, system information of delay-tolerant UE, and new machine type communication system information NEW MTC SIB; and
the first physical channel is a physical downlink shared channel PDSCH carrying the system information, and/or an enhanced PDSCH carrying the system information.

28. The method according to any one of claims 15 to 27, wherein the scheduling information is at least one of downlink control information DCI for scheduling the SIB1, DCI for scheduling the SIB2, DCI for scheduling the SI, DCI for scheduling the MTC SIB1, DCI for scheduling the MTC SIB2, DCI for scheduling the MTC SI, DCI for scheduling the system information of a new UE category, DCI for scheduling the system information of a new UE type, DCI for scheduling the system information of low-cost UE, DCI for scheduling the system information of coverage-enhanced UE, DCI for scheduling the system information of delay-tolerant UE, and DCI for scheduling the new MTC SIB; and
the first physical channel is a physical downlink control channel PDCCH carrying the scheduling information, and/or an enhanced PDCCH carrying the scheduling information.

29. An information transmission apparatus in a TDD system, comprising:
a mapping module, configured to map first information onto multiple preset subframes in a radio frame, wherein the multiple preset subframes comprise at least a subframe 0 and a subframe 5, and the first information is system information or scheduling information of the system information; and
a sending module, configured to send a first physical channel to user equipment UE, wherein the first physical channel carries the first information.

30. The apparatus according to claim 29, wherein the multiple preset subframes further comprise either of a subframe 1 and a subframe 6.

31. The apparatus according to claim 29, wherein the multiple preset subframes further comprise a subframe 1 and a subframe 6.

32. The apparatus according to any one of claims 29 to 31, wherein the multiple preset subframes further comprise at least one of a subframe 3, a subframe 4, a subframe 7, a subframe 8, and a subframe 9.

33. The apparatus according to any one of claims 29 to 32, wherein the multiple subframes further comprise the subframe 3, the subframe 4, the subframe 7, the subframe 8, and the subframe 9.

34. The apparatus according to claim 29, wherein
the multiple preset subframes are all downlink subframes in a radio frame that is determined by a pre-stipulated uplink-downlink configuration; or
the multiple preset subframes further comprise all special subframes in a radio frame that is determined by a pre-stipulated uplink-downlink configuration; or
the multiple preset subframes further comprise all downlink subframes and special subframes, except a subframe 0 and a subframe 5, in a radio frame that is determined by a pre-stipulated uplink-downlink configuration; or
the multiple preset subframes are all subframes in the radio frame.

35. The apparatus according to claim 34, wherein that the multiple preset subframes further comprise all downlink subframes and special subframes, except a subframe 0 and a subframe 5, in a radio frame that is determined by a pre-stipulated uplink-downlink configuration comprises:
the multiple preset subframes further comprise all downlink subframes and special subframes, except a subframe 0 and a subframe 5, in a radio frame that is determined by a pre-stipulated uplink-downlink configuration 5.

36. The apparatus according to any one of claims 29 to 35, wherein
a configuration of the special subframe is a pre-stipulated special subframe configuration.

37. The apparatus according to claim 36, wherein for a downlink normal cyclic prefix, the configuration of the special subframe is a pre-stipulated special subframe configuration 4, and for a downlink extended cyclic prefix, the configuration of the special subframe is a pre-stipulated special subframe configuration 3.

38. The apparatus according to claim 36 or 37, wherein
the special subframe is the subframe 1 and/or the subframe 6.

39. The apparatus according to any one of claims 29 to 38, wherein the sending module is further configured to send a second physical channel to the UE, wherein an uplink-downlink configuration of a radio frame for transmitting the second physical channel is different from an uplink-downlink configuration of the radio frame for transmitting the first information, and/or, a special subframe configuration of a special subframe in the radio frame for transmitting the second physical channel is different from a special subframe configuration of a special subframe in the radio frame for transmitting the first information; and the second physical channel comprises any one of a physical downlink control channel PDCCH, an enhanced physical downlink control channel ePDCCH, a physical control format indicator channel PCFICH, a physical hybrid automatic repeat request indicator channel PHICH, and a physical downlink shared channel PDSCH.

40. The apparatus according to any one of claims 29 to 39, wherein the system information is at least one of a master information block MIB, a master information block of a new UE category, a master information block of a new UE type, a master information block of coverage-enhanced UE, a master information block of delay-tolerant UE, and a machine type communication master information block MTC MIB; and
the first physical channel is a physical broadcast channel PBCH carrying the system information, and/or an enhanced PBCH carrying the system information.

41. The apparatus according to claims 29 to 39, wherein the system information is at least one of a system information block type 1 SIB1, a system information block type 2 SIB2, system information SI, a machine type communication system information block type 1 MTC SIB1, a machine type communication system information block type 2 MTC SIB2, machine type communication system information MTC SI, system information of a new UE category, system information of a new UE type, system information of low-cost UE, system information of coverage-enhanced UE, system information of delay-tolerant UE, and new machine type communication system information NEW MTC SIB; and
the first physical channel is a physical downlink shared channel PDSCH carrying the system information, and/or an enhanced PDSCH carrying the system information.

42. The apparatus according to any one of claims 29 to 41, wherein the scheduling information is at least one of downlink control information DCI for scheduling the SIB1, DCI for scheduling the SIB2, DCI for scheduling the SI, DCI for scheduling the MTC SIB1, DCI for scheduling the MTC SIB2, DCI for scheduling the MTC SI, DCI for scheduling the system information of a new UE category, DCI for scheduling the system information of a new UE type, DCI for scheduling the system information of low-cost UE, DCI for scheduling the system information of coverage-enhanced UE, DCI for scheduling the system information of delay-tolerant UE, and DCI for scheduling the new MTC SIB; and
the first physical channel is a physical downlink control channel PDCCH carrying the scheduling information, and/or an enhanced PDCCH carrying the scheduling information.

43. An information determining apparatus in a TDD system, comprising:
a receiving module, configured to receive a first physical channel in multiple preset subframes in a radio frame, wherein the multiple preset subframes comprise at least a subframe 0 and a subframe 5, the first physical channel carries first information, and the first information is system information or scheduling information of the system information; and
a determining module, configured to determine the first information according to the received first physical channel.

44. The apparatus according to claim 43, wherein the multiple preset subframes further comprise either of a subframe 1 and a subframe 6.

45. The apparatus according to claim 43, wherein the multiple preset subframes further comprise a subframe 1 and a subframe 6.

46. The apparatus according to any one of claims 43 to 45, wherein the multiple preset subframes further comprise at least one of a subframe 3, a subframe 4, a subframe 7, a subframe 8, and a subframe 9.

47. The apparatus according to any one of claims 43 to 46, wherein the multiple preset subframes further comprise the subframe 3, the subframe 4, the subframe 7, the subframe 8, and the subframe 9.

48. The apparatus according to claim 43, wherein
the multiple preset subframes are all downlink subframes in a radio frame that is determined by a pre-stipulated uplink-downlink configuration; or
the multiple preset subframes further comprise all special subframes in a radio frame that is determined by a pre-stipulated uplink-downlink configuration; or
the multiple preset subframes further comprise all downlink subframes and special subframes, except a subframe 0 and a subframe 5, in a radio frame that is determined by a pre-stipulated uplink-downlink configuration; or
the multiple preset subframes are all subframes in the radio frame.

49. The apparatus according to claim 48, wherein that the multiple preset subframes further comprise all downlink subframes and special subframes, except a subframe 0 and a subframe 5, in a radio frame that is determined by a pre-stipulated uplink-downlink configuration comprises:
the multiple preset subframes further comprise all downlink subframes and special subframes, except a subframe 0 and a subframe 5, in a radio frame that is determined by a pre-stipulated uplink-downlink configuration 5.

50. The apparatus according to any one of claims 43 to 49, wherein
a configuration of the special subframe is a pre-stipulated special subframe configuration.

51. The apparatus according to claim 50, wherein for a downlink normal cyclic prefix, the configuration of the special subframe is a pre-stipulated special subframe configuration 4, and for a downlink extended cyclic prefix, the configuration of the special subframe is a pre-stipulated special subframe configuration 3.

52. The apparatus according to claim 50 or 51, wherein
the special subframe is the subframe 1 and/or the subframe 6.

53. The apparatus according to any one of claims 43 to 52, wherein the receiving module is further configured to receive a second physical channel, wherein an uplink-downlink configuration of a radio frame for transmitting the second physical channel is different from an uplink-downlink configuration of the radio frame for transmitting the first information, and/or, a special subframe configuration of a special subframe in the radio frame for transmitting the second physical channel is different from a special subframe configuration of a special subframe in the radio frame for transmitting the first information; and the second physical channel comprises any one of a physical downlink control channel PDCCH, an enhanced physical downlink control channel ePDCCH, a physical control format indicator channel PCFICH, a physical hybrid automatic repeat request indicator channel PHICH, and a physical downlink shared channel PDSCH.

54. The apparatus according to any one of claims 43 to 53, wherein the system information is at least one of a master information block MIB, a master information block of a new UE category, a master information block of a new UE type, a master information block of coverage-enhanced UE, a master information block of delay-tolerant UE, and a machine type communication master information block MTC MIB; and
the first physical channel is a physical broadcast channel PBCH carrying the system information, and/or an enhanced PBCH carrying the system information.

55. The apparatus according to any one of claims 43 to 53, wherein the system information is at least one of a system information block type 1 SIB1, a system information block type 2 SIB2, system information SI, a machine type communication system information block type 1 MTC SIB1, a machine type communication system information block type 2 MTC SIB2, machine type communication system information MTC SI, system information of a new UE category, system information of a new UE type, system information of low-cost UE, system information of coverage-enhanced UE, system information of delay-tolerant UE, and new machine type communication system information NEW MTC SIB; and
the first physical channel is a physical downlink shared channel PDSCH carrying the system information, and/or an enhanced PDSCH carrying the system information.

56. The apparatus according to any one of claims 43 to 55, wherein the scheduling information is at least one of downlink control information DCI for scheduling the SIB1, DCI for scheduling the SIB2, DCI for scheduling the SI, DCI for scheduling the MTC SIB1, DCI for scheduling the MTC SIB2, DCI for scheduling the MTC SI, DCI for scheduling the system information of a new UE category, DCI for scheduling the system information of a new UE type, DCI for scheduling the system information of low-cost UE, DCI for scheduling the system information of coverage-enhanced UE, DCI for scheduling the system information of delay-tolerant UE, and DCI for scheduling the new MTC SIB; and
the first physical channel is a physical downlink control channel PDCCH carrying the scheduling information, and/or an enhanced PDCCH carrying the scheduling information.

57. Abase station, comprising:
a processor, configured to map first information onto multiple preset subframes in a radio frame, wherein the multiple preset subframes comprise at least a subframe 0 and a subframe 5, and the first information is system information or scheduling information of the system information; and
a transmitter, configured to send a first physical channel to user equipment UE, wherein the first physical channel carries the first information.

58. The base station according to claim 57, wherein the multiple preset subframes further comprise either of a subframe 1 and a subframe 6.

59. The base station according to claim 57, wherein the multiple preset subframes further comprise a subframe 1 and a subframe 6.

60. The base station according to any one of claims 57 to 59, wherein the multiple preset subframes further comprise at least one of a subframe 3, a subframe 4, a subframe 7, a subframe 8, and a subframe 9.

61. The base station according to any one of claims 57 to 60, wherein the multiple subframes further comprise the subframe 3, the subframe 4, the subframe 7, the subframe 8, and the subframe 9.

62. The base station according to claim 57, wherein
the multiple preset subframes are all downlink subframes in a radio frame that is determined by a pre-stipulated uplink-downlink configuration; or
the multiple preset subframes further comprise all special subframes in a radio frame that is determined by a pre-stipulated uplink-downlink configuration; or
the multiple preset subframes further comprise all downlink subframes and special subframes, except a subframe 0 and a subframe 5, in a radio frame that is determined by a pre-stipulated uplink-downlink configuration; or
the multiple preset subframes are all subframes in the radio frame.

63. The base station according to claim 62, wherein that the multiple preset subframes further comprise all downlink subframes and special subframes, except a subframe 0 and a subframe 5, in a radio frame that is determined by a pre-stipulated uplink-downlink configuration comprises:
the multiple preset subframes further comprise all downlink subframes and special subframes, except a subframe 0 and a subframe 5, in a radio frame that is determined by a pre-stipulated uplink-downlink configuration 5.

64. The base station according to any one of claims 57 to 63, wherein
a configuration of the special subframe is a pre-stipulated special subframe configuration.

65. The base station according to claim 64, wherein for a downlink normal cyclic prefix, the configuration of the special subframe is a pre-stipulated special subframe configuration 4, and for a downlink extended cyclic prefix, the configuration of the special subframe is a pre-stipulated special subframe configuration 3.

66. The base station according to claim 64 or 65, wherein
the special subframe is the subframe 1 and/or the subframe 6.

67. The base station according to any one of claims 57 to 66, wherein the transmitter is further configured to send a second physical channel to the UE, wherein an uplink-downlink configuration of a radio frame for transmitting the second physical channel is different from an uplink-downlink configuration of the radio frame for transmitting the first information, and/or, a special subframe configuration of a special subframe in the radio frame for transmitting the second physical channel is different from a special subframe configuration of a special subframe in the radio frame for transmitting the first information; and the second physical channel comprises any one of a physical downlink control channel PDCCH, an enhanced physical downlink control channel ePDCCH, a physical control format indicator channel PCFICH, a physical hybrid automatic repeat request indicator channel PHICH, and a physical downlink shared channel PDSCH.

68. The base station according to any one of claims 57 to 67, wherein the system information is at least one of a master information block MIB, a master information block of a new UE category, a master information block of a new UE type, a master information block of coverage-enhanced UE, a master information block of delay-tolerant UE, and a machine type communication master information block MTC MIB; and
the first physical channel is a physical broadcast channel PBCH carrying the system information, and/or an enhanced PBCH carrying the system information.

69. The base station according to any one of claims 57 to 67, wherein the system information is at least one of a system information block type 1 SIB1, a system information block type 2 SIB2, system information SI, a machine type communication system information block type 1 MTC SIB1, a machine type communication system information block type 2 MTC SIB2, machine type communication system information MTC SI, system information of a new UE category, system information of a new UE type, system information of low-cost UE, system information of coverage-enhanced UE, system information of delay-tolerant UE, and new machine type communication system information NEW MTC SIB; and
the first physical channel is a physical downlink shared channel PDSCH carrying the system information, and/or an enhanced PDSCH carrying the system information.

70. The base station according to any one of claims 57 to 69, wherein the scheduling information is at least one of downlink control information DCI for scheduling the SIB1, DCI for scheduling the SIB2, DCI for scheduling the SI, DCI for scheduling the MTC SIB1, DCI for scheduling the MTC SIB2, DCI for scheduling the MTC SI, DCI for scheduling the system information of a new UE category, DCI for scheduling the system information of a new UE type, DCI for scheduling the system information of low-cost UE, DCI for scheduling the system information of coverage-enhanced UE, DCI for scheduling the system information of delay-tolerant UE, and DCI for scheduling the new MTC SIB; and
the first physical channel is a physical downlink control channel PDCCH carrying the scheduling information, and/or an enhanced PDCCH carrying the scheduling information.

71. User equipment, comprising:
a receiver, configured to receive a first physical channel in multiple preset subframes in a radio frame, wherein the multiple preset subframes comprise at least a subframe 0 and a subframe 5, the first physical channel carries first information, and the first information is system information or scheduling information of the system information; and
a processor, configured to determine the first information according to the received first physical channel.

72. The user equipment according to claim 71, wherein the multiple preset subframes further comprise either of a subframe 1 and a subframe 6.

73. The user equipment according to claim 71, wherein the multiple preset subframes further comprise a subframe 1 and a subframe 6.

74. The user equipment according to any one of claims 71 to 73, wherein the multiple preset subframes further comprise at least one of a subframe 3, a subframe 4, a subframe 7, a subframe 8, and a subframe 9.

75. The user equipment according to any one of claims 71 to 74, wherein the multiple preset subframes further comprise the subframe 3, the subframe 4, the subframe 7, the subframe 8, and the subframe 9.

76. The user equipment according to claim 71, wherein
the multiple preset subframes are all downlink subframes in a radio frame that is determined by a pre-stipulated uplink-downlink configuration; or
the multiple preset subframes further comprise all special subframes in a radio frame that is determined by a pre-stipulated uplink-downlink configuration; or
the multiple preset subframes further comprise all downlink subframes and special subframes, except a subframe 0 and a subframe 5, in a radio frame that is determined by a pre-stipulated uplink-downlink configuration; or
the multiple preset subframes are all subframes in the radio frame.

77. The user equipment according to claim 76, wherein that the multiple preset subframes further comprise all downlink subframes and special subframes, except a subframe 0 and a subframe 5, in a radio frame that is determined by a pre-stipulated uplink-downlink configuration comprises:
the multiple preset subframes further comprise all downlink subframes and special subframes, except a subframe 0 and a subframe 5, in a radio frame that is determined by a pre-stipulated uplink-downlink configuration 5.

78. The user equipment according to any one of claims 71 to 77, wherein
a configuration of the special subframe is a pre-stipulated special subframe configuration.

79. The user equipment according to claim 78, wherein for a downlink normal cyclic prefix, the configuration of the special subframe is a pre-stipulated special subframe configuration 4, and for a downlink extended cyclic prefix, the configuration of the special subframe is a pre-stipulated special subframe configuration 3.

80. The user equipment according to claim 78 or 79, wherein
the special subframe is the subframe 1 and/or the subframe 6.

81. The user equipment according to any one of claims 71 to 80, wherein the receiver is further configured to receive a second physical channel, wherein an uplink-downlink configuration of a radio frame for transmitting the second physical channel is different from an uplink-downlink configuration of the radio frame for transmitting the first information, and/or, a special subframe configuration of a special subframe in the radio frame for transmitting the second physical channel is different from a special subframe configuration of a special subframe in the radio frame for transmitting the first information; and the second physical channel comprises any one of a physical downlink control channel PDCCH, an enhanced physical downlink control channel ePDCCH, a physical control format indicator channel PCFICH, a physical hybrid automatic repeat request indicator channel PHICH, and a physical downlink shared channel PDSCH.

82. The user equipment according to any one of claims 71 to 81, wherein the system information is at least one of a master information block MIB, a master information block of a new UE category, a master information block of a new UE type, a master information block of coverage-enhanced UE, a master information block of delay-tolerant UE, and a machine type communication master information block MTC MIB; and
the first physical channel is a physical broadcast channel PBCH carrying the system information, and/or an enhanced PBCH carrying the system information.

83. The user equipment according to any one of claims 71 to 81, wherein the system information is at least one of a system information block type 1 SIB1, a system information block type 2 SIB2, system information SI, a machine type communication system information block type 1 MTC SIB1, a machine type communication system information block type 2 MTC SIB2, machine type communication system information MTC SI, system information of a new UE category, system information of a new UE type, system information of low-cost UE, system information of coverage-enhanced UE, system information of delay-tolerant UE, and new machine type communication system information NEW MTC SIB; and
the first physical channel is a physical downlink shared channel PDSCH carrying the system information, and/or an enhanced PDSCH carrying the system information.

84. The user equipment according to any one of claims 71 to 83, wherein the scheduling information is at least one of downlink control information DCI for scheduling the SIB1, DCI for scheduling the SIB2, DCI for scheduling the SI, DCI for scheduling the MTC SIB1, DCI for scheduling the MTC SIB2, DCI for scheduling the MTC SI, DCI for scheduling the system information of a new UE category, DCI for scheduling the system information of a new UE type, DCI for scheduling the system information of low-cost UE, DCI for scheduling the system information of coverage-enhanced UE, DCI for scheduling the system information of delay-tolerant UE, and DCI for scheduling the new MTC SIB; and
the first physical channel is a physical downlink control channel PDCCH carrying the scheduling information, and/or an enhanced PDCCH carrying the scheduling information.

85. A communications system, comprising: the information transmission apparatus in a TDD system according to any one of claims 29 to 42 and the information determining apparatus in a TDD system according to any one of claims 43 to 56.

86. A communications system, comprising: the base station according to any one of claims 57 to 70 and the user equipment according to any one of claims 71 to 84.
